(19) Europäisches Patentamt / European Patent Office / Office européen des brevets

(11) **EP 2 795 984 B1**

(12) **FASCICULE DE BREVET EUROPEEN**

(45) Date de publication et mention
de la délivrance du brevet:
**11.10.2017 Bulletin 2017/41**

(21) Numéro de dépôt: **12860085.5**

(22) Date de dépôt: **19.12.2012**

(51) Int Cl.:
*H04W 72/12* (2009.01)    *H04B 7/04* (2017.01)
*H04W 72/08* (2009.01)

(86) Numéro de dépôt international:
**PCT/FR2012/052996**

(87) Numéro de publication internationale:
**WO 2013/093341 (27.06.2013 Gazette 2013/26)**

(54) **PROCEDE DE GROUPEMENT DE COUPLES EMETTEUR-RECEPTEUR POUR COMMUNIQUER SUR UN RESEAU DE COMMUNICATIONS**

VERFAHREN ZUM BILDEN VON GRUPPEN VON SENDER/EMPFÄNGER-PAAREN ZUR KOMMUNIKATION ÜBER EIN KOMMUNIKATIONSNETZ

METHOD FOR FORMING GROUPS OF TRANSMITTER/RECEIVER PAIRS FOR COMMUNICATING OVER A COMMUNICATIONS NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2011 FR 1162396**

(43) Date de publication de la demande:
**29.10.2014 Bulletin 2014/44**

(73) Titulaire: **Orange**
**75015 Paris (FR)**

(72) Inventeurs:
• **SAADANI, Ahmed**
**F-92130 Issy Les Moulineaux (FR)**
• **BEN HALIMA, Slim**
**F-92130 Issy Les Moulineaux (FR)**

(74) Mandataire: **Fontenelle, Sandrine et al**
**Cabinet Beau de Loménie**
**158, rue de l'Université**
**75340 Paris Cedex 07 (FR)**

(56) Documents cités:
US-A1- 2003 021 257    US-A1- 2010 227 566
US-A1- 2010 227 613    US-B2- 8 036 098

• HUI SHEN ET AL: "An Iterative Interference Alignment Scheme for the SISO Interference Channel", WIRELESS PERSONAL COMMUNICATIONS, KLUWER ACADEMIC PUBLISHERS, DO, vol. 67, no. 3, 29 September 2011 (2011-09-29), pages 707-720, XP035131533, ISSN: 1572-834X, DOI: 10.1007/S11277-011-0406-4
• HUI SHEN ET AL: "A Novel Iterative Interference Alignment Scheme via Convex Optimization for the MIMO Interference Channel", VEHICULAR TECHNOLOGY CONFERENCE FALL (VTC 2010-FALL), 2010 IEEE 72ND, IEEE, PISCATAWAY, NJ, USA, 6 September 2010 (2010-09-06), pages 1-5, XP031770032, ISBN: 978-1-4244-3573-9
• HUI SHEN ET AL: "The Novel Iterative Interference Alignment Scheme for the SISO Interference Channel", 2010 IEEE VEHICULAR TECHNOLOGY CONFERENCE (VTC 2010-SPRING) - 16-19 MAY 2010 - TAIPEI, TAIWAN, IEEE, US, 16 May 2010 (2010-05-16), pages 1-5, XP031695972, ISBN: 978-1-4244-2518-1
• HUI SHEN ET AL: "The New Interference Alignment Scheme for the MIMO Interference Channel", WIRELESS COMMUNICATIONS AND NETWORKING CONFERENCE (WCNC), 2010 IEEE, IEEE, PISCATAWAY, NJ, USA, 18 April 2010 (2010-04-18), pages 1-6, XP031706727, ISBN: 978-1-4244-6396-1

- HUI SHEN ET AL: "MSE-Based Transceiver Designs for the MIMO Interference Channel", IEEE TRANSACTIONS ON WIRELESS COMMUNICATIONS, IEEE SERVICE CENTER, PISCATAWAY, NJ, US, vol. 9, no. 11, 1 November 2010 (2010-11-01), pages 3480-3489, XP011319042, ISSN: 1536-1276

- HUI SHEN ET AL: "Iterative Minimum Mean Square Error Interference Alignment Scheme for the MIMO X Channel", IEICE TRANSACTIONS ON COMMUNICATIONS, COMMUNICATIONS SOCIETY, TOKYO, JP, vol. E94B, no. 5, 1 May 2011 (2011-05-01), pages 1348-1354, XP001563493, ISSN: 0916-8516, DOI: 10.1587/TRANSCOM.E94.B.1348

**Description**

Arrière-plan de l'invention

L'invention se rapporte au domaine général des télécommunications.

Elle concerne plus particulièrement une méthode de désignation d'un groupe de couples émetteur-récepteur autorisés à communiquer simultanément sur un réseau de télécommunications lorsque des techniques d'alignement d'interférences sont mises en oeuvre sur ce réseau afin de gérer l'interférence multi-utilisateurs générées par ces communications simultanées. Une telle méthode est également connue sous le nom de méthode de groupement.

L'invention a ainsi une application privilégiée mais non limitative dans le domaine des réseaux sans fil, comme par exemple des réseaux WIFI® (WIreless FIdelity) dans lesquels une pluralité de points d'accès peuvent être déployés pour servir une pluralité d'utilisateurs ou des réseaux mobiles utilisant des FEMTO cellules (ou FEMTOcells en anglais) tels que définis par le standard 3GPP (Third Generation Partnership Project).

De façon connue, un problème majeur rencontré dans les réseaux où plusieurs couples émetteur-récepteur peuvent être amenés à communiquer simultanément est l'interférence générée par ces couples émetteur-récepteur entre eux.

Diverses techniques ont été proposées pour gérer cette interférence.

Parmi ces techniques, les techniques (ou algorithmes) dites d'alignement d'interférences consistent :

- d'une part, à confiner les interférences vues par un récepteur particulier dans un sous-espace vectoriel de dimension réduite, en appliquant au signal utile, au niveau de l'émetteur couplé à ce récepteur, une matrice de précodage ; et
- d'autre part, à utiliser les dimensions restantes pour décoder le signal utile en le projetant sur un sous-espace vectoriel orthogonal au sous-espace vectoriel associé aux interférences.

Le document US 2010/227613 décrit un procédé et un système de communication permettant de limiter l'information remontée par les récepteurs à propos des canaux d'interférences pour l'alignement d'interférences.

Le document US 2010/227566 décrit un procédé et un système permettant de contrôler l'interférence en utilisant une technique de beamforming aléatoire.

Dans le cas de systèmes comprenant plusieurs couples émetteur-récepteur disposant respectivement de multiples antennes en émission et en réception (aussi appelé système MIMO pour Multiple Input Multiple Output), ces techniques d'alignement d'interférences exploitent en outre la dimension spatiale offerte par les antennes multiples en émission et en réception pour atteindre l'alignement des interférences.

Il existe notamment pour les systèmes MIMO des techniques d'alignement d'interférences itératives. Ces techniques présentent l'avantage de ne pas requérir une connaissance globale au niveau de chaque émetteur des canaux de propagation associés à tous les couples émetteurs-récepteurs participant à l'alignement d'interférences. Plus précisément, elles mettent en oeuvre un précodage du signal au niveau de l'émetteur (ex. un dispositif A) et une suppression des interférences au niveau du récepteur (ex. un dispositif B) via l'utilisation de filtres, mis à jour à chaque itération en alternant entre transmission sur le réseau direct (émission dans le sens A vers B) et transmission sur le réseau dual (émission dans le sens B vers A). Certaines de ces techniques itératives s'appuient notamment à cette fin sur une réciprocité du canal entre le réseau direct et le réseau dual.

De façon générale, la faisabilité de l'alignement d'interférences dépend des paramètres du système considéré. Ainsi, pour un système MIMO, la faisabilité de l'alignement d'interférences dépend notamment du nombre de couples émetteur-récepteur amenés à communiquer simultanément, du nombre d'antennes d'émission et du nombre d'antennes de réception des couples émetteur-récepteur (qui ne sont pas nécessairement identiques pour chaque couple) et du nombre de flux de données parallèles échangés entre chaque couple émetteur-récepteur. Autrement dit, en fonction des paramètres du système, l'alignement d'interférences ne peut être atteint que pour un nombre limité $NG \leq NGmax$ de couples émetteur-récepteur communiquant simultanément.

Compte tenu de cette contrainte, des méthodes de groupement peuvent être mises en oeuvre pour désigner un groupe de NG couples émetteur-récepteur aptes à communiquer simultanément sur le réseau et à exécuter efficacement une technique d'alignement d'interférences (c'est-à-dire à atteindre un alignement des interférences).

Les NG couples émetteur-récepteur formant ce groupe peuvent être désignés par exemple de façon aléatoire. Toutefois, on comprend bien qu'un tel choix de groupement, s'il ne rajoute pas de complexité dans le système, ne permet pas de garantir les performances du système notamment en termes de débit.

Des méthodes de groupement alternatives existent dans l'état actuel de la technique permettant d'améliorer le débit atteint par le système et qui consistent à sélectionner un groupe de couples émetteur-récepteur vérifiant des critères déterminés. Une telle méthode est décrite notamment dans le document US 8 036 098.

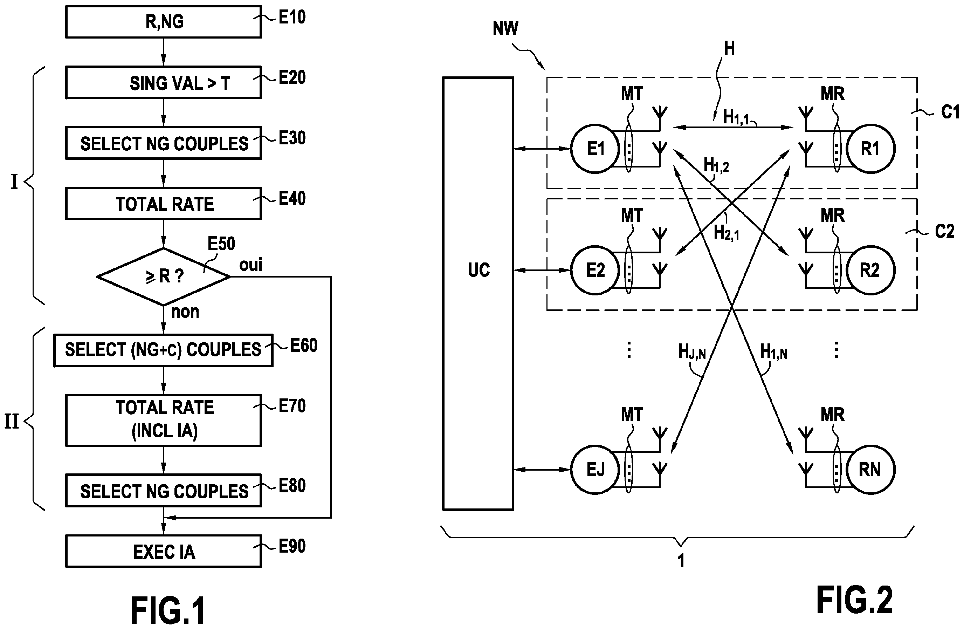

Cette méthode, illustrée schématiquement à la **figure 1,** fixe un débit cible R minimal à atteindre et une taille NG de groupe permettant de réaliser l'alignement d'interférences (étape E10).

Puis, au cours d'une première phase I, on identifie parmi les couples émetteur-récepteur du système ceux dont les matrices des canaux directs présentent des valeurs singulières dépassant un seuil prédéterminé T (étape E20). Les NG couples émetteur-récepteur ayant les plus grandes valeurs singulières sont alors choisis pour former un groupe en vue de réaliser l'alignement d'interférences (étape E30). Le débit total offert par les NG couples sélectionnés est calculé (étape E40) et comparé au débit cible R (étape E50).

Si le débit total dépasse le débit cible R (réponse oui au test de l'étape E50), le groupe des NG couples sélectionnés est validé et exécute une technique d'alignement d'interférence (étape E90).

En revanche dans le cas contraire, une seconde phase II de recherche d'un nouveau groupe débute.

Durant cette seconde phase II, on choisit aléatoirement un groupe de NG+c couples émetteur-récepteur (étape E60). Puis, on évalue pour chaque sous-groupe possible de NG couples émetteur-récepteur sélectionnés dans ce groupe, le débit total pouvant être atteint en tenant compte de l'application d'une technique d'alignement d'interférences non itérative, nécessitant la connaissance du canal de propagation au niveau de l'émetteur (étape E70). Le sous-groupe de NG couples correspondant au débit total maximal est sélectionné (étape E80) pour exécuter l'algorithme d'alignement d'interférences (étape E90).

Toutefois, si une telle méthode permet d'améliorer le débit atteint par le système, elle ne tient pas compte de l'efficacité spectrale totale du système.

Elle peut par ailleurs présenter une complexité importante lorsque la phase II de recherche exhaustive est mise en oeuvre, notamment du fait de l'exécution répétée de la technique d'alignement d'interférences et des informations requises par cette exécution (ex. connaissance globale du canal de propagation au niveau de chaque émetteur). Cette complexité augmente encore lorsque l'on considère une technique itérative d'alignement d'interférences, qui nécessite généralement un nombre d'itérations important pour converger.

Un des buts de l'invention est de remédier aux insuffisances des méthodes de groupement de l'état de la technique. La présente invention est définie par une unité centrale, un récepteur, un émetteur, un système, trois procédés correspondants et un programme d'ordinateur, respectivement selon les revendications indépendantes 11, 12, 13, 14, 1, 3, 6 et 10. selon un premier aspect, l'invention vise un procédé de groupement d'un nombre prédéterminé NG de couples émetteur-récepteur pour communiquer sur un réseau de communications, ce procédé comprenant :

- pour chaque groupe d'un ensemble déterminé de groupes comprenant NG couples émetteur-récepteur :

  o une étape d'exécution, par les NG couples du groupe, d'une technique itérative d'alignement d'interférences durant un nombre I1 prédéterminé d'itérations sur des signaux émis par ce groupe ;
  o une étape d'envoi par chaque émetteur des NG couples du groupe d'un signal pilote précodé à l'aide d'une matrice résultant de l'exécution de ladite technique itérative d'alignement d'interférences, les émetteurs des NG couples du groupe émettant les signaux pilotes successivement ;
  o une étape d'évaluation par chaque récepteur des NG couples du groupe, d'une métrique représentative d'une distance entre un sous-espace vectoriel engendré par le signal pilote précodé émis par l'émetteur avec lequel le récepteur forme un couple émetteur-récepteur, et un sous-espace vectoriel engendré par des interférences affectant ce signal pilote précodé déterminé à partir des signaux pilotes précodés émis par les autres émetteurs du groupe ;

- une étape de calcul, par une unité centrale du réseau, d'une métrique globale associée à chaque groupe de l'ensemble déterminé de groupes à partir des métriques évaluées par les récepteurs des NG couples de ce groupe ; et
- une étape de sélection, par l'unité centrale, d'un groupe parmi l'ensemble déterminé de groupes pour communiquer sur le réseau, optimisant cette métrique globale.

Ainsi l'invention propose une nouvelle méthode de groupement utilisant une technique d'alignement d'interférences itérative, et qui permet de sélectionner un groupe de NG couples émetteur-récepteur dans un réseau de communications, optimisant une métrique globale calculée à partir de métriques associées aux différents couples émetteur-récepteur du groupe, chaque métrique associée à un couple émetteur-récepteur du groupe étant représentative d'une distance entre un sous-espace vectoriel engendré par un signal utile et un sous-espace vectoriel engendré par des interférences affectant ce signal utile au niveau du récepteur du couple, après alignement des interférences. Ces métriques sont avantageusement évaluées par les récepteurs d'un groupe, à partir des signaux pilotes précodés envoyés successivement par les émetteurs de ce groupe.

Le nombre NG peut être quelconque dès lors que l'alignement d'interférences pour un groupe de NG couples émetteur-récepteur est réalisable. Ainsi, si NGmax désigne le nombre maximal de couples émetteur-récepteur permettant un alignement d'interférences, NG est un entier quelconque inférieur ou égal à NGmax.

En sélectionnant le groupe qui optimise une métrique globale calculée à partir des métriques associées aux différents couples émetteur-récepteur du groupe, on sélectionne le groupe le plus prometteur d'un point de vue de la distance entre le sous-espace vectoriel engendré par le signal utile et le sous-espace vectoriel engendré par les interférences, autrement dit celui qui maximise l'efficacité spectrale du système. L'invention améliore donc l'efficacité spectrale totale du système. Cette amélioration est liée non seulement au critère considéré pour sélectionner le groupe, mais également au fait que ce critère porte sur une métrique évaluée après une exécution de la technique d'alignement d'interférences pendant un nombre d'itérations prédéterminé I1 (I1 supérieur ou égal à 1).

En effet, l'exécution de la technique d'alignement d'interférences par chaque groupe testé, même pendant un nombre d'itérations I1 relativement limité, permet d'identifier approximativement les directions des interférences et la direction du signal utile. L'estimation de ces directions est ensuite améliorée grâce au traitement des signaux pilotes précodés émis successivement par les NG émetteurs du groupe. En effet, conformément à l'invention, lorsqu'un émetteur du groupe émet un signal pilote, les autres émetteurs du groupe sont inactifs (i.e. ils restent silencieux), de sorte que l'estimation par les récepteurs du groupe des directions du signal utile et des interférences est grandement facilitée.

De façon avantageuse, le nombre d'itérations I1 requis est inférieur, voire bien inférieur au nombre d'itérations requis pour assurer la convergence de cette technique itérative (et donc l'alignement des interférences). Quelques itérations seulement (voire une seule itération) suffisent.

L'invention bénéficie donc d'une complexité réduite en dépit de l'utilisation d'une technique d'alignement itérative, puisque que quelques itérations seulement suffisent à chaque récepteur pour évaluer leur métrique et permettre à l'unité centrale de sélectionner un groupe.

Dans un mode particulier de réalisation, suite à l'étape de sélection, les couples du groupe sélectionné pour communiquer sur le réseau de communications exécutent la technique itérative d'alignement d'interférences durant un nombre I2 d'itérations supérieur au nombre I1 sur des signaux émis par le groupe sélectionné.

Lors de cette exécution de la technique d'alignement, les couples du groupe sélectionné peuvent avantageusement réutiliser comme valeurs initiales, les matrices de précodage et les matrices de suppression d'interférences évaluées lors des I1 itérations précédentes exécutées par le groupe. On obtient ainsi une convergence plus rapide de la technique d'alignement d'interférences (autrement dit, I2 sera plus faible).

En variante, un autre algorithme d'alignement d'interférences que celui utilisé pendant les I1 itérations de la phase de test des groupes peut être utilisé par le groupe sélectionné sur le réseau.

La méthode de groupement proposée par l'invention s'appuie ainsi sur différents acteurs : les couples émetteur-récepteur du système de communication mais également une unité centrale chargée de sélectionner le groupe autorisé à communiquer sur le réseau et à exécuter l'alignement d'interférences. On notera que cette unité centrale peut se trouver en émission (par exemple au niveau de l'un quelconques des émetteurs ou dans une unité de gestion des émetteurs), en réception (par exemple au niveau de l'un quelconque des récepteurs ou dans une unité de gestion des récepteurs), ou n'importe où dans le réseau de communication.

Ainsi l'invention vise également un procédé de sélection, par une unité centrale d'un réseau de communications, d'un groupe comprenant un nombre prédéterminé NG de couples émetteur-récepteur pour communiquer sur ce réseau, ce procédé comprenant :

- pour chaque groupe d'un ensemble déterminé de groupes comprenant NG couples émetteur-récepteur, une étape d'obtention de métriques évaluées par les récepteurs des NG couples du groupe, suite à l'exécution d'une technique d'alignement d'interférences par le groupe durant un nombre prédéterminé I1 d'itérations sur des signaux émis par ce groupe, et à la réception de signaux pilotes émis successivement par les émetteurs des NG couples du groupe, précodés à l'aide de matrices résultant de l'exécution de la technique itérative d'alignement d'interférences, chaque métrique évaluée par un récepteur dudit groupe étant représentative d'une distance entre un sous-espace vectoriel engendré par le signal pilote précodé émis par l'émetteur avec lequel le récepteur forme un couple émetteur-récepteur, et un sous-espace vectoriel engendré par des interférences affectant ce signal pilote précodé déterminé à partir des signaux pilotes précodés émis par les autres émetteurs du groupe ;
- une étape de calcul d'une métrique globale associée à chaque groupe de l'ensemble déterminé de groupes à partir des métriques évaluées par les récepteurs des NG couples de ce groupe ; et
- une étape de sélection d'un groupe, parmi l'ensemble déterminé de groupes, pour communiquer sur le réseau, optimisant cette métrique globale.

Corrélativement, l'invention vise aussi une unité centrale d'un réseau de communications apte à sélectionner un groupe pour communiquer sur ledit réseau, ce groupe comprenant un nombre prédéterminé NG de couples émetteur-récepteur, cette unité centrale comprenant :

- des moyens pour obtenir, pour chaque groupe d'un ensemble déterminé de groupes comprenant NG couples émetteur-récepteur, des métriques évaluées par les récepteurs des NG couples du groupe, suite à l'exécution par ce groupe d'une technique d'alignement d'interférences durant un nombre prédéterminé I1 d'itérations sur des signaux émis par ce groupe et à la réception de signaux pilotes émis successivement par les émetteurs des NG couples du groupe, précodés à l'aide de matrices résultant de l'exécution de la technique itérative d'alignement d'interférences, chaque métrique évaluée par un récepteur du groupe étant représentative d'une distance entre un sous-espace vectoriel engendré par le signal pilote précodé émis par l'émetteur avec lequel le récepteur forme un couple émetteur-récepteur, et un sous-espace vectoriel engendré par des interférences affectant ce signal pilote précodé déterminé à partir des signaux pilotes précodés émis par les autres émetteurs du groupe ;

- des moyens de calcul d'une métrique globale associée à chaque groupe de l'ensemble déterminé de groupes à partir des métriques évaluées par les récepteurs des NG couples de ce groupe ; et
- des moyens de sélection d'un groupe pour communiquer sur le réseau parmi l'ensemble déterminé de groupes, optimisant cette métrique globale.

Le procédé de sélection et l'unité centrale selon l'invention disposent des mêmes avantages que le procédé de groupement selon l'invention.

La métrique globale associée à un groupe est par exemple égale à la somme des métriques évaluées par les récepteurs des NG couples de ce groupe. Bien entendu en variante, d'autres métriques globales peuvent être envisagées.

Dans un mode particulier de l'invention, l'unité centrale est en charge de l'organisation temporelle (i.e. scheduling en anglais) des différentes étapes mises en oeuvre conformément à l'invention, et notamment de la répartition des périodes de communication attribuées à chaque couple émetteur-récepteur ou à chaque groupe (ex. période d'exécution de la technique d'alignement d'interférences par chaque groupe testé, période d'envoi d'un signal pilote par un émetteur seulement, etc.). Cette organisation peut se faire via l'envoi de commandes appropriées par l'unité centrale aux acteurs du réseau concernés.

En variante, cette organisation peut être prédéterminée, et appliquée directement par les couples émetteur-récepteur sans recevoir de commandes particulières de l'unité centrale.

Selon un troisième aspect, l'invention vise aussi un procédé d'évaluation d'une métrique par un récepteur d'un réseau de communications, ce récepteur formant un couple émetteur-récepteur avec un émetteur du réseau, ce couple appartenant à un groupe comportant un nombre prédéterminé NG de couples émetteur-récepteur. Conformément à l'invention ce procédé d'évaluation comprend :

- une étape d'exécution d'une technique itérative d'alignement d'interférences durant un nombre prédéterminé I1 d'itérations sur des signaux émis par le groupe ;
- une étape de réception de signaux pilotes émis successivement par les émetteurs des NG couples dudit groupe et précodés à l'aide de matrices résultant de l'exécution de la technique itérative d'alignement d'interférences ; et
- une étape d'évaluation d'une métrique représentative d'une distance entre un sous-espace vectoriel engendré par le signal pilote précodé émis par l'émetteur avec lequel le récepteur forme un couple émetteur-récepteur, et un sous-espace vectoriel engendré par des interférences affectant ce signal pilote précodé, déterminé à partir des signaux pilotes précodés émis par les autres émetteurs du groupe.

Corrélativement, l'invention vise aussi un récepteur d'un réseau de communications, ce récepteur formant un couple émetteur-récepteur avec un émetteur du réseau, ce couple appartenant à un groupe comportant NG couples émetteur-récepteur. Conformément à l'invention, ce récepteur comprend :

- des moyens d'exécution d'une technique itérative d'alignement d'interférences durant un nombre prédéterminé I1 d'itérations sur des signaux émis par le groupe ;
- des moyens de réception de signaux pilotes émis successivement par les émetteurs des NG couples dudit groupe et précodés à l'aide de matrices résultant de l'exécution de la technique itérative d'alignement d'interférences ; et
- des moyens d'évaluation d'une métrique représentative d'une distance entre un sous-espace vectoriel engendré par le signal pilote précodé émis par l'émetteur avec lequel le récepteur forme un couple émetteur-récepteur, et un sous-espace vectoriel engendré par des interférences affectant ce signal pilote précodé, déterminé à partir des signaux pilotes précodés émis par les autres émetteurs du groupe.

Le procédé d'évaluation d'une métrique et le récepteur selon l'invention disposent des mêmes avantages que le procédé de groupement selon l'invention.

Dans un mode particulier de réalisation, le procédé d'évaluation d'une métrique comprend en outre une étape de transmission de cette métrique à l'émetteur avec lequel le récepteur forme le couple ou à une unité centrale du réseau de communications.

Ainsi l'invention s'adapte à l'architecture du réseau de communications, selon si le récepteur communique directement avec l'unité centrale ou via l'émetteur avec lequel il est couplé.

Dans un autre mode de réalisation, la métrique évaluée est représentative d'une distance chordale entre les deux sous-espaces.

Dans un mode particulier de réalisation dans lequel lorsque le récepteur comporte MR antennes de réception, le sous-espace engendré par des interférences considéré pour évaluer la métrique est le sous-espace vectoriel engendré par les MR-1 interférences les plus fortes.

L'invention exploite ainsi dans ce mode de réalisation les multiples antennes de réception présentes au niveau du récepteur pour définir le sous-espace vectoriel engendré par les interférences considéré dans la métrique.

Dans un mode particulier de réalisation, les différentes étapes du procédé de sélection d'un groupe et du procédé d'évaluation d'une métrique selon l'invention sont déterminées par des instructions de programmes d'ordinateurs.

En conséquence, l'invention vise aussi un programme d'ordinateur sur un support d'informations, ce programme étant susceptible d'être mis en oeuvre dans une unité centrale ou plus généralement dans un ordinateur, ce programme comportant des instructions adaptées à la mise en oeuvre des étapes d'un procédé de sélection d'un groupe tel que décrit ci-dessus. L'invention vise également un programme d'ordinateur sur un support d'informations, ce programme étant susceptible d'être mis en oeuvre dans un récepteur ou plus généralement dans un ordinateur, ce programme comportant des instructions adaptées à la mise en oeuvre des étapes d'un procédé d'évaluation d'une métrique tel que décrit ci-dessus

Ces programmes peuvent utiliser n'importe quel langage de programmation, et être sous la forme de codes source, codes objet, ou de codes intermédiaires entre codes source et codes objet, tels que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un quatrième aspect, l'invention vise un émetteur d'un réseau de communications, cet émetteur formant un couple émetteur-récepteur avec un récepteur du réseau, ce couple appartenant à un groupe comportant un nombre NG prédéterminé de couples émetteur-récepteur, cet émetteur comprenant :

- des moyens d'exécution d'une technique itérative d'alignement d'interférences durant un nombre prédéterminé I1 d'itérations sur des signaux émis par le groupe ; et
- des moyens d'envoi d'un signal pilote précodé à l'aide d'une matrice résultant de l'exécution de la technique itérative d'alignement d'interférences.

L'invention vise aussi un système d'un réseau de communications comprenant :

- une pluralité de couples émetteur-récepteur formés d'un émetteur conforme à l'invention et d'un récepteur conforme à l'invention ; et
- une unité centrale conforme à l'invention, apte à sélectionner parmi ladite pluralité de couples émetteur-récepteur, un groupe comprenant un nombre prédéterminé NG de couples émetteur-récepteur pour communiquer sur le réseau de communication.

L'émetteur et le système de communication selon l'invention disposent des mêmes avantages que le procédé de groupement selon l'invention.

On peut également envisager, dans d'autres modes de réalisation, que le procédé de groupement, le procédé de sélection, le procédé d'évaluation, l'unité centrale, le récepteur, l'émetteur et le système de communication selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1, déjà décrite, représente de façon schématique une méthode de groupement de l'état de la technique ;
- la figure 2 représente un système conforme à l'invention dans un mode particulier de réalisation ;
- les figures 3A, 3B et 3C illustrent respectivement l'architecture matérielle d'une unité centrale, d'un récepteur et d'un émetteur conformes à l'invention dans un mode particulier de réalisation ;
- la figure 4 illustre, sous forme d'ordinogramme, les principales étapes d'un procédé de groupement conforme à l'invention, lorsqu'il est mis en oeuvre par le système représenté sur la figure 2, dans un mode particulier de réalisation ;
- la figure 5 illustre, sous forme d'ordinogramme, les principales étapes d'un procédé de sélection conforme à l'invention, lorsqu'il est mis en oeuvre par l'unité centrale représentée sur la figure 2, dans un mode particulier de réalisation ;
- la figures 6 et 7 illustrent, sous forme d'ordinogramme, les principales étapes d'un procédé d'évaluation d'une métrique conforme à l'invention, lorsqu'elles sont mises en oeuvre par les récepteurs représentés sur la figure 2 ;
- la figure 8 illustre schématiquement la répartition des temps de communication entre les différents acteurs du système représenté sur la figure 2 ; et
- la figure 9 illustre des exemples de performances pouvant être atteintes à l'aide du procédé de groupement selon l'invention.

Description détaillée de l'invention

La **figure 2** représente, dans son environnement, un système 1 d'un réseau de communications NW conforme à l'invention, dans un mode particulier de réalisation.

Conformément à l'invention, le système 1 comprend :

- une pluralité d'émetteurs E1, E2,..., EJ, conformes à l'invention ;
- une pluralité de récepteurs R1, R2,..., RN, conformes à l'invention ; et
- une unité centrale UC, conforme à l'invention.

Chaque émetteur est équipé ici de MT antennes d'émission avec MT>1, et chaque récepteur est équipé de MR antennes de réception, avec MR>1.

Dans l'exemple envisagé ici, le réseau NW est un réseau WIFI® : les émetteurs E1, E2, ..., EJ sont des points d'accès au réseau NW, et les récepteurs R1, R2, ..., RN sont des terminaux d'utilisateurs souhaitant accéder au réseau NW.

Bien entendu, l'invention s'applique dans d'autres contextes, et notamment à d'autres réseaux de communication et à d'autres dispositifs émetteurs et/ou récepteurs. Ainsi, par exemple, l'invention s'applique également à un réseau 3GPP composé d'une pluralité de femtocellules (émetteurs au sens de l'invention) en vue de servir une pluralité de terminaux utilisateurs (récepteurs au sens de l'invention).

On suppose ici que lors d'une transmission sur le réseau de communications NW, chaque émetteur Ej n'est autorisé à communiquer qu'avec un seul récepteur Rn avec lequel il forme un couple émetteur-récepteur Cjn=(Ej,Rn). On suppose que les procédures permettant au récepteur de se coupler avec l'émetteur (ex. procédure d'appairage dans un réseau WIFI®) ont été réalisées avec succès au préalable.

Par souci de simplification, on suppose dans la suite de la description que J=N, et que chaque émetteur Ek, k=1,...,N est couplé avec le récepteur Rk, k=1,...,N, formant ainsi un couple émetteur-récepteur Ck=(Ek,Rk), k=1,...,N. Par ailleurs, on se limite à l'émission d'un seul flux de données par émetteur.

Ces hypothèses ne sont toutefois pas limitatives, l'invention s'appliquant également à une configuration de réseau différente dans laquelle le nombre d'émetteurs J est distinct du nombre de récepteurs N, et/ou dans laquelle chaque émetteur peut envoyer une pluralité de flux de données simultanément à chaque récepteur. Par exemple, le nombre d'émetteurs J peut être inférieur au nombre de récepteurs N de sorte qu'un émetteur peut être amené à servir différents récepteurs durant des périodes de transmission distinctes.

Durant une transmission de données sur le réseau NW, les couples émetteur-récepteur qui communiquent simultanément sur le réseau NW, s'interfèrent entre eux. Conformément à l'invention, pour pallier cet inconvénient, ils mettent en oeuvre une technique (ou algorithme) d'alignement d'interférences itérative notée IA afin d'éliminer ces interférences.

Comme décrit précédemment, l'alignement d'interférences via l'utilisation de telles techniques n'est réalisable que pour un nombre limité NG de couples émetteur-récepteur communiquant simultanément.

Dans le mode de réalisation décrit ici, les émetteurs E1, E2,..., EN sont connectés à l'unité centrale UC qui prend en charge le choix du groupe GOPT de NG couples émetteur-récepteur qui vont être activés simultanément, en vue de communiquer sur le réseau NW et d'exécuter la technique IA d'alignement d'interférences. Le groupe GOPT est sélectionné parmi un ensemble déterminé $\Omega$ de groupes de NG couples émetteur-récepteur. Les autres couples émetteur-récepteur du réseau NW restent inactifs (i.e. silencieux) le temps de la transmission par les couples émetteur-récepteur du groupe GOPT.

Les émetteurs Ek, k=1,..,N, les récepteurs Rk, k=1,...,N et l'unité centrale UC disposent ici de l'architecture matérielle d'un ordinateur.

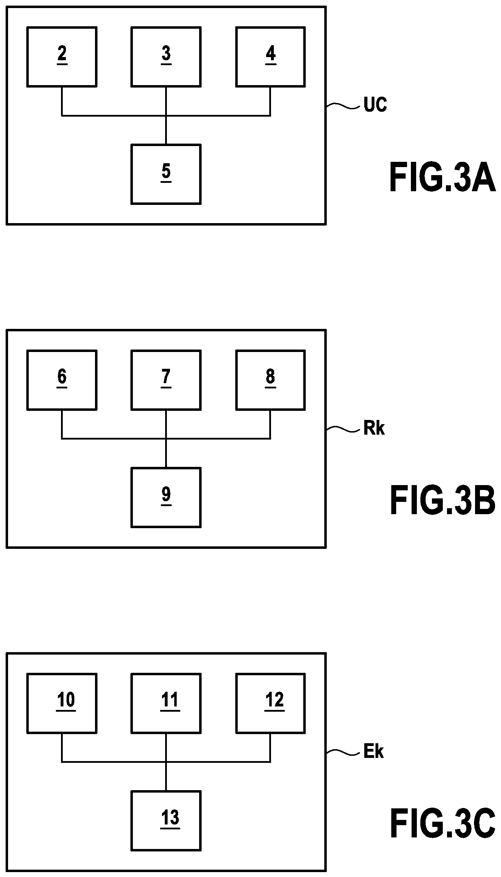

Ainsi, en référence à la **figure 3A,** l'unité centrale UC comprend notamment un processeur 2, une mémoire vive 3, une mémoire morte 4, ainsi que des moyens de communication 5 sur le réseau NW avec notamment les émetteurs Ek, k=1,...,N et les récepteurs Rk, n=1,...,N.

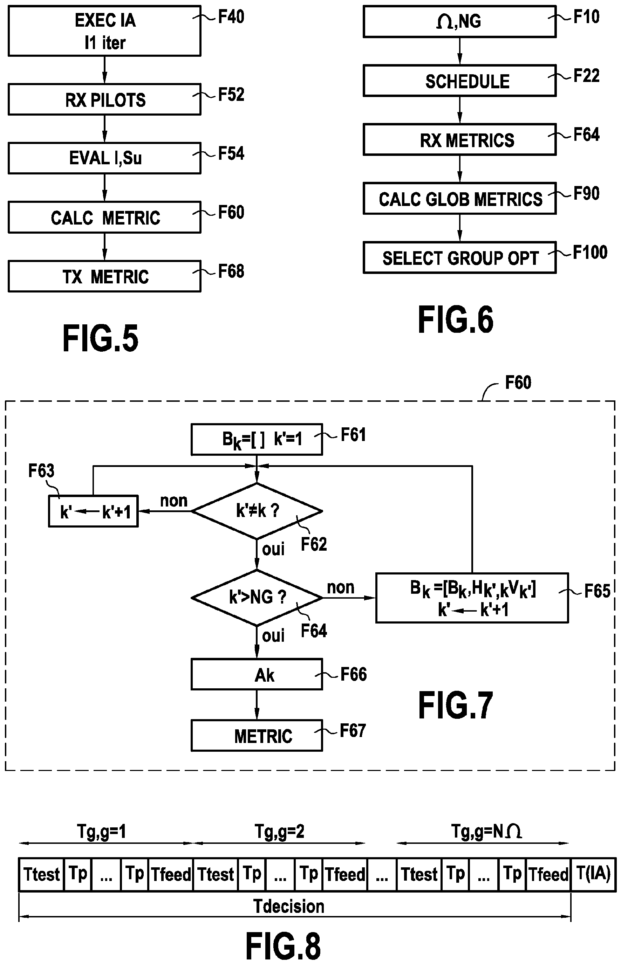

La mémoire morte 4 de l'unité centrale constitue un support d'enregistrement conforme à l'invention, lisible par le processeur 2 et sur lequel est enregistré un programme d'ordinateur conforme à l'invention, comportant des instructions pour l'exécution des étapes d'un procédé de sélection d'un groupe conforme à l'invention, décrit ultérieurement en référence à la figure 5, dans une variante particulière de réalisation.

De façon similaire, en référence à la **figure 3B,** chaque récepteur Rk, k=1,...,N comprend un processeur 6, une mémoire vive 7, une mémoire morte 8, ainsi que des moyens de communication 9 sur le réseau NW avec notamment l'émetteur Ek avec lequel il forme le couple Ck=(Ek,Rk). Ces moyens de communication 9 intègrent en particulier les MR antennes de réception du récepteur Rk.

La mémoire morte 8 de chaque récepteur Rk constitue un support d'enregistrement conforme à l'invention, lisible par le processeur 6 et sur lequel est enregistré un programme d'ordinateur conforme à l'invention, comportant des instructions pour l'exécution des étapes d'un procédé d'évaluation d'une métrique conforme à l'invention, décrit ultérieurement en référence aux figures 6 et 7, dans une variante particulière de réalisation. La mémoire morte 8 constitue également un support d'enregistrement d'un programme comportant des instructions pour l'exécution de la technique itérative d'alignement d'interférences IA.

Par ailleurs, en référence à la **figure 3C,** chaque émetteur Ek, k=1,...,N comprend un processeur 10, une mémoire vive 11, une mémoire morte 12, ainsi que des moyens de communication 13 sur le réseau NW avec notamment l'unité centrale et le récepteur Rk avec lequel il forme le couple Ck=(Ek,Rk). Ces moyens de communication 13 intègrent en particulier les MT antennes d'émission de l'émetteur Ek. La mémoire morte 12 constitue un support d'enregistrement d'un programme comportant des instructions pour l'exécution de la technique itérative d'alignement d'interférences IA.

Comme décrit précédemment, les techniques d'alignement d'interférences visent à confiner les interférences vues par un récepteur Rk dans un sous-espace vectoriel de dimension réduite, en appliquant au signal émis par l'émetteur Ek une matrice de précodage, et à utiliser les dimensions restantes pour décoder le signal utile (i.e. signal émis par l'émetteur Ek), en le projetant, via une matrice de traitement, sur un sous-espace vectoriel orthogonal au sous-espace vectoriel associé aux interférences.

Plus précisément, pour un couple Ck=(Ek,Rk) d'émetteur-récepteur appartenant à un groupe G sélectionné par l'unité centrale et appliquant la technique d'alignement d'interférence IA, le signal complexe $\mathbf{x}_k \in \mathbb{C}^{MTx1}$ (vecteur colonne complexe de dimension MT) transmis par l'émetteur Ek via ses MT antennes d'émission s'écrit :

$$\mathbf{x}_k = \mathbf{v}_k s_k$$

où $s_k$ désigne un symbole d'un flux de données destiné au récepteur Rk et $\mathbf{v}_k$ est une matrice de précodage de dimension MTx1 appliquée au symbole destiné au récepteur Rk ($\mathbf{v}_k$ est en fait un vecteur de précodage). On notera que le même principe s'applique aux autres couples émetteur-récepteur Ck'=(Ek',Rk'), k' ≠ k du groupe G.

Le récepteur Rk reçoit alors le signal $\mathbf{y}_k$ (vecteur colonne de dimension MR ici) sur ses MR antennes de réception, défini par :

$$\mathbf{y}_k = \mathbf{H}_{k,k}\mathbf{v}_k s_k + \underbrace{\sum_{\substack{k' \neq k \\ Ck' \in G}} \mathbf{H}_{k',k}\mathbf{v}_{k'}s_{k'}}_{I_k} + \mathbf{n}_k$$

où $\mathbf{H}_{k',k} \in \mathbb{C}^{MRxMT}$ est une matrice complexe de dimensions MRxMT représentant le canal de propagation entre l'émetteur Ek' et le récepteur Rk, et $\mathbf{n}_k$ est un bruit blanc additif gaussien. Le terme $I_k$ reflète l'interférence multi-utilisateurs affectant le signal utile $\mathbf{H}_{k,k}\mathbf{v}_k s_k$ au niveau du récepteur Rk. Autrement dit, le sous-espace vectoriel engendré par le signal utile est défini par la matrice $\mathbf{H}_{k,k}\mathbf{v}_k$, tandis que le sous-espace vectoriel engendré par les interférences est défini

par la matrice $\bigcup_{\substack{k' \neq k \\ Ck' \in G}} \mathbf{H}_{k',k} \mathbf{v}_{k'}$.

Le récepteur Rk applique une matrice de traitement $u_k \in \mathbb{C}^{1 \times MR}$ (i.e. un vecteur de traitement de dimensions MR ici) au signal reçu $y_k$ pour récupérer les symboles $s_k$ qui lui sont destinés. Cette matrice de traitement projette le signal utile sur un sous-espace vectoriel orthogonal au sous-espace engendré par les interférences.

On note que dans l'exemple envisagé ici, l'émetteur Ek n'envoyant qu'un seul flux de données au récepteur Rk (i.e. d=1), il applique un vecteur de précodage $\mathbf{v}_k$ aux données transmises au récepteur Rk, et de façon similaire, le récepteur Rk applique un vecteur de traitement $\mathbf{u}_k$ au signal reçu. Le vecteur de précodage $\mathbf{v}_k$ constitue une matrice de précodage particulière au sens de l'invention, de dimensions MTx1. De même le vecteur de traitement $\mathbf{u}_k$ constitue une matrice de traitement particulière, de dimensions 1xMR.

La transposition à des matrices de précodage de dimensions MTxd et à des matrices de traitement de dimensions dxMR, d désignant le nombre de flux de données émis par l'émetteur Ek à destination d'un récepteur Rk, ne pose aucune difficulté à l'homme du métier et n'est donc pas décrite en détail ici. Dans la suite de la description on utilisera indifféremment le terme vecteur ou matrice pour désigner $\mathbf{u}_k$ et $\mathbf{v}_k$.

L'invention ne se limite pas à une technique itérative d'alignement d'interférences particulière. Des exemples de techniques itératives d'alignement d'interférences pouvant être utilisées lors de la mise en oeuvre de l'invention sont décrites notamment dans le document de Kumar et Xue intitulé « An iterative algorithm for joint signal and interference alignment », International Symposium on Information Theory (ISIT), Juin 2010, et dans le document de Gomodam et al. intitulé « Approaching the Capacity of Wireless Networks through Distributed Interference Alignment », IEEE Global Telecommunications Conference GLOBECOM, Décembre 2008.

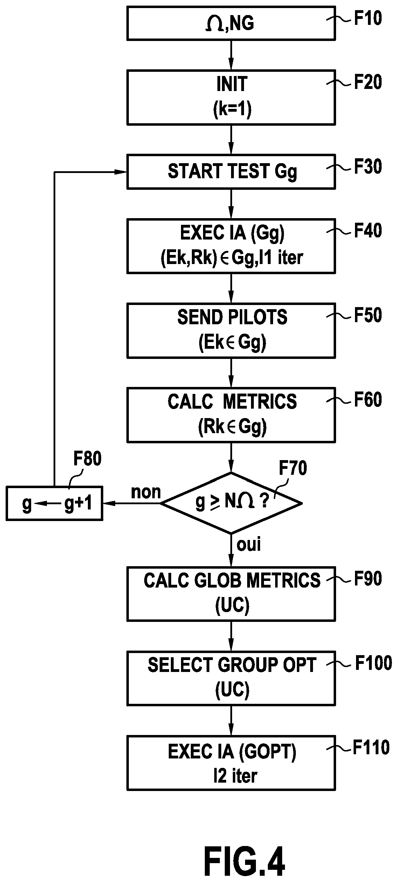

Nous allons maintenant décrire en référence aux **figures 4 à 7,** les principales étapes d'un procédé de groupement, d'un procédé de sélection d'un groupe et d'un procédé d'évaluation d'une métrique mises en oeuvre respectivement par le système de communication 1, l'unité centrale UC, et les récepteurs Rk, k=1,...N, de la figure 2, dans un mode particulier de réalisation.

Comme mentionné précédemment, l'alignement d'interférences n'est réalisable que pour un nombre limité NG de couples émetteur-récepteur communiquant simultanément sur le réseau NW. Le document de F. Negro et al. intitulé « Interference Alignement Limits for K-user frequency flat MIMO interference channel », European Signal Processing conférence (Eusipco), Août 2009 identifie un ensemble de conditions à respecter pour que l'alignement d'interférences soit réalisable dans un système MIMO.

L'application de ces conditions permet d'évaluer un nombre maximal NGmax de couples émetteur-récepteur permettant de réaliser l'alignement. Ainsi, par exemple, pour un système MIMO symétrique, dans lequel chaque émetteur cherche à transmettre un unique flux de données et est muni de MT antennes d'émission, et chaque récepteur est muni de MR antennes de réception, NGmax = MT+MR-1.

Afin de maximiser l'efficacité spectrale totale du système, on cherchera donc préférentiellement à sélectionner un groupe GOPT composé de NG=NGmax couples émetteur-récepteur. Toutefois l'invention peut également être appliquée pour sélectionner un groupe composé d'un nombre NG quelconque de couples émetteur-récepteur inférieur à NGmax.

Le nombre NG fixé, il existe, dans le mode de réalisation représenté sur la figure 2, $C_N^{NG}$ combinaisons (i.e. groupes) de NG couples parmi les N couples émetteur-récepteur du réseau NW. On désigne par $\Omega$ l'ensemble formé par ces $C_N^{NG}$ groupes et $N\Omega = C_N^{NG}$ le cardinal de l'ensemble $\Omega$.

A titre d'exemple, si on considère un système formé de N=6 couples émetteur-récepteur, chaque émetteur étant muni de MT=2 antennes d'émission et chaque récepteur étant muni de MR=2 antennes de réception, l'alignement d'interférences peut être réalisé sur NG=NGmax = 3 couples. L'ensemble $\Omega$ des groupes du système formé de 3 couples comprend 20 groupes correspondant aux 20 combinaisons possibles de 3 couples d'émetteur-récepteur choisis parmi les 6 couples émetteur-récepteur du réseau NW.

De façon similaire, si on considère un système formé de N=6 couples émetteur-récepteur, chaque émetteur étant muni de MT=4 antennes d'émission et chaque récepteur étant muni de MR=2 antennes de réception, l'alignement d'interférences peut être réalisé sur NG=NGmax = 5 couples. L'ensemble $\Omega$ des groupes du système formé de 5 couples comprend 6 groupes correspondant aux 6 combinaisons possibles de 5 couples d'émetteur-récepteur choisis parmi les 6 couples émetteur-récepteur du réseau NW.

Dans un autre mode de réalisation, le nombre d'émetteurs J est distinct du nombre N de récepteurs (ex. J<N). Par exemple, on considère un système formé par J=3 émetteurs et N=6 récepteurs, une paire de deux récepteurs étant affectée à un même émetteur. Pendant chaque période de transmission, chaque émetteur sert un seul récepteur parmi les deux récepteurs qui lui sont affectés. Dans cette configuration, l'unité centrale UC a la possibilité de choisir entre 8 configurations de groupement possibles comprenant 3 couples émetteur-récepteur.

Dans l'exemple envisagé ici, le nombre NG et l'ensemble Ω sont déterminés par l'unité centrale UC (étape F10), comme décrit ci-dessus. Toutefois ces paramètres peuvent être définis par d'autres entités du réseau NW et transmis selon des moyens connus en soi à l'unité centrale UC.

Le procédé de groupement est alors mis en oeuvre par les différents acteurs du système 1 pour identifier un groupe GOPT parmi l'ensemble Ω déterminé de groupes de NG couples, autorisé à communiquer sur le réseau NW durant une période de transmission.

Au cours de ce procédé, dans le mode de réalisation décrit ici, tous les groupes de l'ensemble Ω sont testés en vue de permettre à l'unité centrale UC de sélectionner le groupe qui optimise un critère prédéterminé. La période nécessaire pour réaliser ces tests et prendre une décision est appelée période de décision. Elle est de durée $T_{decision}$.

Les étapes décrites ci-dessous sont répétées pour chaque groupe Gg de l'ensemble Ω. On note g=1,..., $N\Omega$, l'indice du groupe Gg de l'ensemble Ω testé (g initialisé à 1 à l'étape F20).

L'ordre dans lequel les groupes sont testés est décidé par l'unité centrale UC (étape F22). Cet ordre détermine la répartition des temps de communication attribués à chaque groupe sur le réseau NW durant la période de décision. La répartition des temps de communication sera commentée ultérieurement en référence à la figure 8.

L'unité centrale UC sélectionne le groupe Gg et démarre une phase de test de ce groupe (étape F30). Lorsqu'un groupe Gg est testé, les autres groupes de couples émetteur-récepteur de l'ensemble Ω restent silencieux ou inactifs, c'est-à-dire qu'ils ne communiquent pas sur le réseau NW. Ceci peut résulter de l'envoi d'une commande appropriée par l'unité centrale UC aux autres groupes non testés de l'ensemble Ω.

Conformément à l'invention, durant cette phase de test, les NG couples du groupe Gg exécutent la technique d'alignement d'interférences itérative IA durant un nombre d'itérations I1 prédéterminé (étape F40). Cette technique est appliquée sur des signaux émis par les NG couples du groupe Gg (signaux émis par le groupe Gg au sens de l'invention), de façon connue en soi.

Ainsi, en réutilisant les notations introduites précédemment, chaque émetteur Ek, k=1,...,NG du groupe Gg envoie un signal (par exemple un signal pilote prédéfini), précodé à l'aide d'une matrice de précodage $\mathbf{v}_k$ de dimensions MTx1, et chaque récepteur applique sur le signal reçu une matrice de traitement $\mathbf{u}_k$ de dimensions 1xMR, les matrices $\mathbf{v}_k$ et $\mathbf{u}_k$ étant respectivement définies de sorte à confiner les interférences reçues au niveau du récepteur Rk dans un sous-espace vectoriel de dimension réduite et à projeter le signal utile émis par l'émetteur sur un sous-espace orthogonal au sous-espace vectoriel des interférences. La façon dont sont déterminées à proprement parler les matrices $\mathbf{u}_k$ et $\mathbf{v}_k$ dépend de la technique d'alignement d'interférences itératives implémentée et ne sera pas décrite plus en détail ici. Les matrices $\mathbf{v}_k$ et $\mathbf{u}_k$ sont mises à jour à chaque itération de la technique IA.

Le nombre d'itérations I1 durant lequel est exécuté la technique IA par les couples du groupe Gg est choisi préférentiellement bien inférieur au nombre d'itérations I2 nécessaire pour assurer la convergence de la technique IA. Ceci permet avantageusement de limiter la complexité de la phase de test. Par ailleurs, les inventeurs ont constaté qu'en pratique, quelques itérations suffisent à estimer approximativement la direction des interférences et du signal utile (y compris une seule itération), par exemple I1 = 10 pour I2 égal à 200.

Cet exemple n'est toutefois donné qu'à titre illustratif, et le choix du nombre d'itérations I1 (I1 supérieur ou égal à 1) résulte d'un compromis performance/complexité que l'on souhaite atteindre.

Conformément à l'invention, suite à l'exécution de la technique IA par les couples du groupe Gg durant un nombre d'itérations I1, chaque émetteur Ek, k=1,...,NG du groupe Gg va ensuite émettre un signal pilote prédéterminé noté $SP_k$, composé de plusieurs symboles et précodé à l'aide de la matrice de précodage $\mathbf{v}_k$ obtenue par cet émetteur Ek à l'issue des I1 itérations (étape F50). Les émetteurs émettent les signaux pilotes précodés $\mathbf{v}_k SP_k$, k=1,...,NG, à des instants successifs pendant une durée prédéterminée notée Tp (chaque signal est émis pendant une durée Tp).

Lorsqu'un émetteur Ek du groupe Gg testé émet un signal pilote précodé $\mathbf{v}_k SP_k$, les autres émetteurs du groupe Gg (ainsi que les autres groupes de l'ensemble Ω) restent silencieux conformément à l'invention, c'est-à-dire qu'ils ne communiquent pas sur le réseau NW. De cette sorte, les récepteurs du groupe Gg sont capables d'estimer les directions des interférences provenant de chaque émetteur du groupe Gg.

En effet, durant une période Tp, le seul signal reçu par les récepteurs du groupe Gg testé est le signal pilote précodé $\mathbf{v}_k SP_k$ émis et précodé par l'émetteur Ek autorisé alors à communiquer sur le réseau NW (étape F52). Chaque récepteur Rk', k'=1,...,NG peut donc estimer à partir du signal reçu $\mathbf{H}_{k',k}\mathbf{v}_k SP_k$ la direction du signal utile pour ce récepteur, si le récepteur est le récepteur Rk couplé à l'émetteur Ek (i.e. k'=k), ou la direction de l'interférence engendrée par l'émetteur Ek si le récepteur est un récepteur Rk' non couplé avec l'émetteur Ek (i.e. k'≠k) (étape F54).

Chaque récepteur Rk, k=1,...,N évalue alors une métrique dIA(k) à partir des signaux pilotes reçus des différents émetteurs du groupe (étape F60). Dans l'exemple envisagé ici, cette métrique caractérise la distance entre un sous-espace vectoriel défini par la matrice $\mathbf{SU}_k = \mathbf{H}_{k,k}\mathbf{v}_k$ et engendré par le signal utile pour le récepteur Rk considéré (autrement dit par le signal $\mathbf{v}_k SP_k$), et un sous-espace vectoriel défini par la matrice $\mathbf{A}_k$, engendré par les interférences affectant ce signal utile (autrement dit par les signaux pilotes précodés envoyés par les autres émetteurs que $E_k$). Dans le mode de réalisation décrit ici, on considère comme sous-espace $\mathbf{A}_k$ engendré par les interférences, le sous-espace engendré par les MR-1 interférences les plus fortes estimées par le récepteur.

La **figure 7** illustre les étapes mises en oeuvre par le récepteur Rk pour évaluer la métrique dIA(k). On désigne par $\mathbf{B}_k$ la matrice définissant le sous-espace vectoriel engendré par l'ensemble des interférences affectant le signal utile au niveau du récepteur Rk.

Comme décrit précédemment, la métrique dIA(k) est évaluée en prenant en compte les différents signaux pilotes précodés reçus des émetteurs Ek', k'=1,...,NG.

Plus précisément à cette fin, le récepteur Rk initialise un compteur k' à 1 et la matrice $\mathbf{B}_k$ à une matrice vide (étape F61). Les étapes décrites ci-après sont répétées pour chaque valeur du compteur k' comprise entre 1 et NG.

Si k'=k (réponse non au test F62), le signal pilote reçu de l'émetteur Ek'=Ek par le récepteur Rk correspond à un signal utile donc n'est pas pris en compte pour l'estimation de la matrice $\mathbf{B}_k$. Le compteur k' est simplement incrémenté (étape F63).

En revanche si k'≠k (réponse oui au test F62) et k'≤NG (réponse non au test F64), le signal pilote précodé reçu de l'émetteur Ek' correspond à un signal d'interférence non encore pris en compte dans l'estimation de la matrice $\mathbf{B}_k$. La matrice $\mathbf{B}_k$ est alors mise à jour de la façon suivante (étape F65) :

$$\mathbf{B}_k \leftarrow [\mathbf{B}_k,\ \mathbf{H}_{k',k}\mathbf{v}_{k'}]$$

Le compteur k' est incrémenté de 1.

Les étapes F62-F65 sont alors répétées pour cette nouvelle valeur de k'.

Si le récepteur Rk détermine que le compteur k'>NG (réponse oui au test F64), il extrait alors de la matrice $\mathbf{B}_k$ courante, les MR-1 interférents les plus forts pour former la matrice $\mathbf{A}_k$ ; autrement dit, la matrice $\mathbf{A}_k$ est constituée des MR-1 colonnes de la matrice $\mathbf{B}_k$ ayant la plus grande norme (étape F66). On applique par exemple la norme $l_2$, connue de l'homme du métier. Cette norme est définie pour un vecteur comme la somme des normes au carré des composantes de ce vecteur. Bien entendu d'autres normes peuvent être envisagées (ex. norme maximale d'une composante du vecteur, etc.)

Dans le mode de réalisation décrit ici, le récepteur Rk évalue la métrique dIA(k) en calculant la distance entre le sous-espace vectoriel défini par la matrice $\mathbf{SU}_k$ et le sous-espace vectoriel défini par la matrice $\mathbf{A}_k$ (étape F67).

A cette fin, il utilise ici comme distance la distance chordale définie par :

$$d_{chord}(\mathbf{M1},\mathbf{M2}) = \frac{1}{\sqrt{2}} \|O(\mathbf{M1})O(\mathbf{M1})^H - O(\mathbf{M2})O(\mathbf{M2})^H\|_F$$

où $O(\mathbf{M})$ désigne une matrice dont les colonnes forment une base orthonormée de l'espace vectoriel engendré par les colonnes de la matrice $\mathbf{M}$, et $\|\ \|_F$ désigne la norme de Frobenius et elle est donnée par $\|\mathbf{M}\|_F = \sqrt{\mathrm{tr}(\mathbf{MM}^H)}$.

La métrique dIA(k) calculée par le récepteur Rk est donc :

$$dIA(k) = d_{chord}(\mathbf{SU_k},\mathbf{A_k})$$

D'autres distances entre deux sous-espaces vectoriels que la distance chordale peuvent être envisagées en variante. De telles distances sont par exemple décrites dans le document de Zuccon et al. intitulé « Semantic Spaces: Measuring the Distance between different Subspaces », Proceedings of the 3rd International Symposium on Quantum interaction, 2009.

Dans le mode de réalisation décrit ici, chaque récepteur Rk transmet ensuite la métrique dIA(k) ainsi évaluée à l'émetteur Ek (étape F68), qui à son tour la transmet à l'unité centrale UC.

En variante, dans un autre mode de réalisation, chaque récepteur Rk transmet la métrique dIA(k) qu'il a évaluée directement à l'unité centrale UC.

La réception par l'unité centrale UC des métriques dIA(k) évaluées par tous les récepteurs Rk, k=1,...,NG du groupe Gg clôture la phase de test pour le groupe Gg.

L'unité centrale détermine alors si l'indice g est supérieur ou égal à N Ω (étape F70).

Si g< N Ω (réponse non au test F70), l'indice g est incrémenté (étape F80), et la phase de test est réalisée pour un nouveau groupe Gg de l'ensemble déterminé Ω.

En revanche si g≥ N Ω (réponse non au test F70), cela signifie que tous les groupes de l'ensemble Ω ont été testés.

Dans le mode de réalisation envisagé ici, on teste de façon exhaustive tous les groupes de l'ensemble $\Omega$. En variante, seulement un sous-ensemble de l'ensemble $\Omega$ peut être testé, présélectionné selon certains critères prédéterminés (ex. sous-groupes impliquant seulement certains émetteurs et/ou récepteurs, etc.).

L'unité centrale UC calcule alors, pour chaque groupe Gg testé de l'ensemble de groupes $\Omega$, une métrique globale associée à ce groupe (étape F90). Cette métrique globale notée Met(Gg) est ici égale à la somme des métriques obtenues de chaque récepteur de ce groupe, autrement dit la métrique globale associée au groupe Gg est donnée par :

$$\mathrm{Met(Gg)} = \sum_{\substack{k=1, \\ Rk\in Gg}}^{NG} \mathrm{dIA(k)}$$

Bien entendu, d'autres métriques globales peuvent être définies à partir des métriques dIA(k) pour calculer pour la métrique globale associée à chaque groupe lors de la mise en oeuvre de l'invention.

Dans un autre mode de réalisation, l'unité centrale UC calcule la métrique globale Met(Gg) associée au groupe Gg durant la phase de test du groupe Gg.

Puis, l'unité centrale UC sélectionne parmi l'ensemble déterminé $\Omega$, le groupe GOPT optimisant la métrique globale, c'est-à-dire le groupe dont la métrique globale est maximale (étape F100). En variante, d'autres critères peuvent être envisagés, en fonction notamment de la définition des métriques globales considérée.

Suite à cette sélection, le groupe GOPT communique durant une période de transmission déterminée sur le réseau NW, et exécute la technique d'alignement d'interférences itérative IA pendant I2 itérations lors de cette communication sur des signaux émis par le groupe GOPT (étape F110). Seuls les couples émetteur-récepteur du groupe GOPT sont actifs durant cette communication, les autres couples émetteur-récepteur ne sont pas autorisés à communiquer et restent silencieux. Le nombre I2 est choisi ici de sorte à assurer la convergence de la technique d'alignement d'interférences.

La **figure 8** illustre un exemple de répartition des temps de communication entre les différents acteurs du système 1 durant la mise en oeuvre du procédé de groupement selon l'invention, dans un mode particulier de réalisation. Cette répartition peut être effectuée par exemple par l'unité centrale UC à l'aide de commandes appropriées envoyées aux différents émetteurs et/ou récepteurs concernés. En variante, elle peut être prédéfinie et connue des différents émetteurs/récepteurs concernés.

L'exécution du procédé de groupement se divise, dans le mode de réalisation décrit ici, en deux périodes :

- une première période de durée $T_{decision}$ pendant laquelle les différents groupes de l'ensemble $\Omega$ sont testés et l'unité centrale sélectionne le groupe GOPT qui sera actif sur le réseau de communications NW ;
- une seconde période de durée T(IA) au cours de laquelle les couples du groupe GOPT sélectionné sont actifs (i.e. communiquent) sur le réseau de communications NW tout en exécutant la technique itérative d'alignement d'interférences IA pendant I2 itérations.

La période $T_{decision}$ est elle-même divisée en $N\Omega$ intervalles d'une durée $T_G$ chacun. Durant chaque intervalle de durée $T_G$, un groupe Gg de couples émetteur-récepteur de l'ensemble $\Omega$ est testé.

Chaque intervalle de durée $T_G$ est formé :

- d'une première période de durée Ttest pendant laquelle l'algorithme itératif IA d'alignement d'interférences est exécuté pour le groupe testé avec un nombre d'itérations I1 ;
- d'une deuxième période de durée NGxTp, pendant laquelle chaque émetteur des NG couples du groupe testé envoie successivement (i.e. chacun à leur tour) un signal pilote précodé par la matrice de précodage résultant de l'exécution de l'algorithme IA par cet émetteur ; et
- d'une troisième période Tfeed, pendant laquelle les récepteurs des NG couples du groupe testé informent les émetteurs de la valeur de la métrique qu'ils ont calculée.

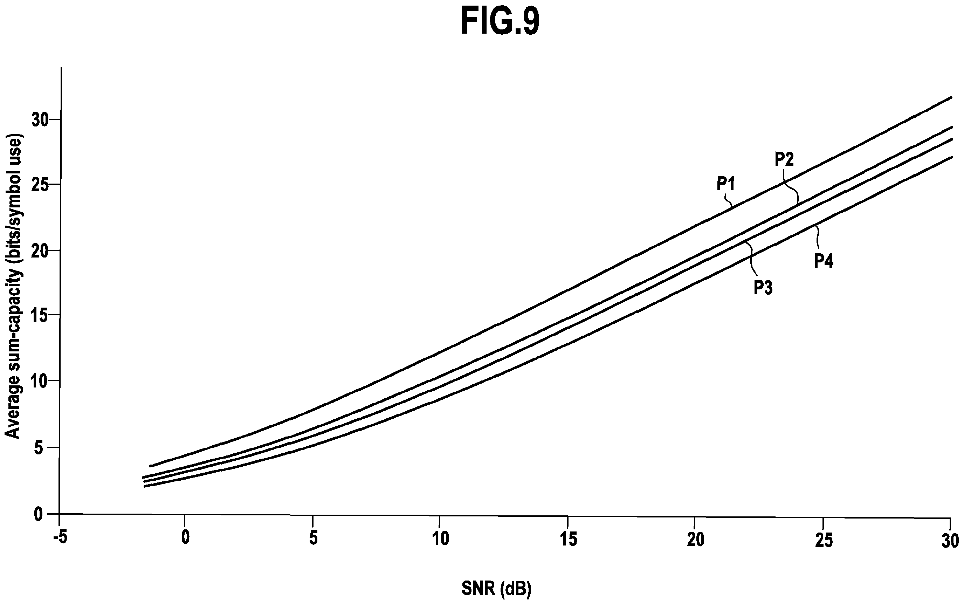

La **figure 9** illustre un exemple de performances, en termes de capacité totale moyenne versus rapport signal-à-bruit SNR (Signal-to-Noise Ratio), obtenues à l'aide d'un procédé de groupement selon l'invention, pour I1=1 itération (courbe P2) et I1=10 itérations (courbe P3), lorsque ce procédé est appliqué à un système comprenant 6 couples émetteur-récepteur avec MT=MR=2 et d=1 flux de données émis par émetteur. Le nombre d'itérations exécuté par le groupe sélectionné par l'unité centrale pour l'alignement d'interférences est I2=200.

Sur cette figure, sont également représentées, à titre indicatif, les performances obtenues en utilisant une méthode de groupement aléatoire (courbe P4) ainsi que les performances d'une méthode de groupement optimale (courbe P1).

**Revendications**

1. Procédé de groupement d'un nombre prédéterminé NG de couples émetteur-récepteur pour communiquer sur un réseau de communications (NW), ledit procédé comprenant :

- pour chaque groupe (Gg) d'un ensemble (Ω) déterminé de groupes comprenant NG couples émetteur-récepteur :

o une étape d'exécution (F40), par les NG couples dudit groupe (Gg), d'une technique (IA) itérative d'alignement d'interférences durant un nombre I1 prédéterminé d'itérations sur des signaux émis par ledit groupe, ladite technique comprenant l'application d'une matrice de précodage par chaque émetteur dudit groupe au signal qu'il émet et l'application d'une matrice de traitement par chaque récepteur dudit groupe au signal qu'il reçoit, les matrices de précodage et de traitement étant mises à jour à chaque itération de la technique itérative d'alignement d'interférences ;
o une étape d'envoi (F50) par chaque émetteur (Ek) des NG couples dudit groupe d'un signal pilote précodé à l'aide de la matrice de précodage résultant de l'exécution de ladite technique (IA) itérative d'alignement d'interférences et obtenue par l'émetteur (Ek) à l'issue desdites I1 itérations, les autres émetteurs du groupe restant silencieux lorsqu'un émetteur du groupe envoie le signal pilote précodé, et les émetteurs des NG couples dudit groupe émettant les signaux pilotes successivement ;
o une étape d'évaluation (F60) par chaque récepteur (Rk) des NG couples dudit groupe, d'une métrique (dIA(k)) représentative d'une distance entre un sous-espace vectoriel engendré par le signal pilote précodé émis par l'émetteur avec lequel le récepteur forme un couple émetteur-récepteur, et un sous-espace vectoriel engendré par des interférences affectant ce signal pilote déterminé à partir des signaux pilotes précodés émis par les autres émetteurs du groupe ;

- une étape de calcul (F90), par une unité centrale (UC) du réseau (NW), d'une métrique globale associée à chaque groupe de l'ensemble (Ω) déterminé de groupes à partir des métriques (dIA(k)) évaluées par les récepteurs des NG couples de ce groupe ; et
- une étape de sélection (F100), par l'unité centrale (UC), d'un groupe (GOPT) parmi l'ensemble déterminé de groupes pour communiquer sur le réseau (NW) optimisant la métrique globale.

2. Procédé de groupement selon la revendication 1 dans lequel, suite à l'étape de sélection (F100), les couples du groupe sélectionné (GOPT) pour communiquer sur le réseau de communications (NW) exécutent (F110) ladite technique itérative (IA) d'alignement d'interférences durant un nombre I2 d'itérations supérieur au nombre I1 sur des signaux émis par ledit groupe sélectionné.

3. Procédé de sélection, par une unité centrale (UC) d'un réseau de communications (NW), d'un groupe (GOPT) comprenant un nombre prédéterminé NG de couples émetteur-récepteur pour communiquer sur ledit réseau, ledit procédé comprenant :

- pour chaque groupe (Gg) d'un ensemble (Ω) déterminé de groupes comprenant NG couples émetteur-récepteur, une étape d'obtention (F64) de métriques (dIA(k)) évaluées par les récepteurs (Rk) des NG couples dudit groupe (Gg), suite à l'exécution (F40) d'une technique (IA) d'alignement d'interférences par ledit groupe (Gg) durant un nombre prédéterminé I1 d'itérations sur des signaux émis par ce groupe, ladite technique d'alignement d'interférences comprenant l'application d'une matrice de précodage par chaque émetteur dudit groupe au signal qu'il émet et l'application d'une matrice de traitement par chaque récepteur dudit groupe au signal qu'il reçoit, les matrices de précodage et de traitement étant mises à jour à chaque itération de la technique itérative d'alignement d'interférences, et suite à la réception (F52) de signaux pilotes émis successivement par les émetteurs (Ek) des NG couples dudit groupe, les autres émetteurs du groupe restant silencieux lorsqu'un émetteur du groupe envoie le signal pilote, lesdits signaux pilotes émis étant précodés à l'aide des matrices de précodage résultant de l'exécution de la technique itérative d'alignement d'interférences et obtenues par les émetteurs (Ek) des NG couples dudit groupe à l'issue des I1 itérations, chaque métrique évaluée par un récepteur dudit groupe étant représentative d'une distance entre un sous-espace vectoriel engendré par le signal pilote précodé émis par l'émetteur avec lequel le récepteur forme un couple émetteur-récepteur, et un sous-espace vectoriel engendré par des interférences affectant ce signal pilote précodé déterminé à partir des signaux pilotes précodés émis par les autres émetteurs du groupe ;
- une étape de calcul (F90) d'une métrique globale associée à chaque groupe dudit ensemble (Ω) déterminé de groupes à partir des métriques (dIA(k)) évaluées par les récepteurs des NG couples de ce groupe (Gg) ; et

- une étape de sélection (F100) d'un groupe (GOPT), parmi l'ensemble déterminé (Ω) de groupes, pour communiquer sur le réseau (NW), optimisant la métrique globale.

4. Procédé de sélection selon la revendication 3 **caractérisé en ce que** la métrique globale associée à un groupe (Gg) est égale à la somme des métriques (dIA(k)) évaluées par les récepteurs des NG couples de ce groupe.

5. Programme d'ordinateur comportant des instructions pour l'exécution des étapes du procédé de sélection selon la revendication 3 lorsque ledit programme est exécuté par un ordinateur.

6. Procédé d'évaluation d'une métrique (dIA(k)) par un récepteur (Rk) d'un réseau de communications (NW), ledit récepteur (Rk) formant un couple émetteur-récepteur avec un émetteur (Ek) du réseau, ce couple appartenant à un groupe (Gg) comportant un nombre prédéterminé NG de couples émetteur-récepteur, ledit procédé d'évaluation comprenant :

- une étape d'exécution (F40) d'une technique (IA) itérative d'alignement d'interférences durant un nombre prédéterminé I1 d'itérations sur des signaux émis par ledit groupe (Gg), ladite technique d'alignement d'interférences comprenant l'application d'une matrice de précodage par chaque émetteur dudit groupe au signal qu'il émet et l'application d'une matrice de traitement par chaque récepteur dudit groupe au signal qu'il reçoit, les matrices de précodage et de traitement étant mises à jour à chaque itération de la technique itérative d'alignement d'interférences ;
- une étape de réception (F52) de signaux pilotes émis successivement par les émetteurs des NG couples dudit groupe, les autres émetteurs du groupe restant silencieux lorsqu'un émetteur du groupe envoie le signal pilote, lesdits signaux pilotes émis étant précodés à l'aide des matrices de précodage résultant de l'exécution de la technique itérative d'alignement d'interférences et obtenues par les émetteurs (Ek) des NG couples dudit groupe à l'issue des I1 itérations ; et
- une étape d'évaluation (F60) d'une métrique (dIA(k)) représentative d'une distance entre un sous-espace vectoriel engendré par le signal pilote précodé émis par l'émetteur avec lequel le récepteur forme un couple émetteur-récepteur, et un sous-espace vectoriel engendré par des interférences affectant ce signal pilote précodé déterminé à partir des signaux pilotes précodés émis par les autres émetteurs du groupe (Gg).

7. Procédé d'évaluation d'une métrique selon la revendication 6 comprenant en outre une étape de transmission (F68) de ladite métrique (dIA(k)) à l'émetteur (Ek) avec lequel ledit récepteur (Rk) forme ledit couple ou à une unité centrale (UC) du réseau de communications.

8. Procédé d'évaluation d'une métrique selon la revendication 6, dans lequel la métrique évaluée est représentative d'une distance chordale entre lesdits sous-espaces vectoriels.

9. Procédé d'évaluation d'une métrique selon la revendication 6 dans lequel le récepteur (Rk) est équipé de MR antennes de réception, et dans lequel le sous-espace engendré par des interférences considéré pour évaluer la métrique est le sous-espace vectoriel engendré par les MR-1 interférences les plus fortes.

10. Programme d'ordinateur comportant des instructions pour l'exécution des étapes du procédé de sélection selon la revendication 6 lorsque ledit programme est exécuté par un ordinateur.

11. Unité centrale (UC) d'un réseau de communications apte à sélectionner un groupe (GOPT) pour communiquer sur ledit réseau, ledit groupe comprenant un nombre prédéterminé NG de couples émetteur-récepteur, ladite unité centrale (UC) comprenant :

- des moyens pour obtenir, pour chaque groupe (Gg) d'un ensemble (Ω) déterminé de groupes comprenant NG couples émetteur-récepteur, des métriques (dIA(k)) évaluées par les récepteurs des NG couples dudit groupe, suite à l'exécution (F40) par ledit groupe d'une technique d'alignement d'interférences durant un nombre prédéterminé I1 d'itérations sur des signaux émis par ce groupe, ladite technique d'alignement d'interférences comprenant l'application d'une matrice de précodage par chaque émetteur dudit groupe au signal qu'il émet et l'application d'une matrice de traitement par chaque récepteur dudit groupe au signal qu'il reçoit, les matrices de précodage et de traitement étant mises à jour à chaque itération de la technique itérative d'alignement d'interférences, et suite à la réception (F52) de signaux pilotes émis successivement par les émetteurs des NG couples dudit groupe, les autres émetteurs du groupe restant silencieux lorsqu'un émetteur du groupe envoie le signal pilote, lesdits signaux pilotes émis étant précodés à l'aide des matrices de précodage résultant de

15

l'exécution de la technique itérative d'alignement d'interférences et obtenues par les émetteurs (Ek) des NG couples dudit groupe à l'issue des I1 itérations, chaque métrique évaluée par un récepteur dudit groupe étant représentative d'une distance entre un sous-espace vectoriel engendré par le signal pilote précodé émis par l'émetteur avec lequel le récepteur forme un couple émetteur-récepteur, et un sous-espace vectoriel engendré par des interférences affectant ce signal pilote précodé déterminé à partir des signaux pilotes précodés émis par les autres émetteurs du groupe ;

- des moyens de calcul d'une métrique globale associée à chaque groupe de l'ensemble déterminé de groupes à partir des métriques évaluées par les récepteurs des NG couples de ce groupe ; et

- des moyens de sélection d'un groupe (GOPT) pour communiquer sur le réseau, parmi l'ensemble déterminé de groupes, optimisant la métrique globale.

12. Récepteur (Rk) d'un réseau de communications (NW), ledit récepteur (Rk) formant un couple émetteur-récepteur avec un émetteur (Ek) du réseau, ce couple appartenant à un groupe (Gg) comportant NG couples émetteur-récepteur, ledit récepteur comprenant :

- des moyens d'exécution d'une technique (IA) itérative d'alignement d'interférences durant un nombre prédéterminé I1 d'itérations sur des signaux émis par ledit groupe, ladite technique d'alignement d'interférences comprenant l'application d'une matrice de précodage par chaque émetteur dudit groupe au signal qu'il émet et l'application d'une matrice de traitement par chaque récepteur dudit groupe au signal qu'il reçoit, les matrices de précodage et de traitement étant mises à jour à chaque itération de la technique itérative d'alignement d'interférences ;

- des moyens de réception de signaux pilotes émis successivement par les émetteurs des NG couples dudit groupe, les autres émetteurs du groupe restant silencieux lorsqu'un émetteur du groupe envoie le signal pilote, lesdits signaux pilotes émis étant précodés à l'aide des matrices de précodage résultant de l'exécution de la technique itérative d'alignement d'interférences et obtenues par les émetteurs (Ek) des NG couples dudit groupe à l'issue des I1 itérations ; et

- des moyens d'évaluation d'une métrique (dIA(k)) représentative d'une distance entre un sous-espace vectoriel engendré par le signal pilote précodé émis par l'émetteur avec lequel le récepteur forme un couple émetteur-récepteur, et un sous-espace vectoriel engendré par des interférences affectant ce signal pilote précodé déterminé à partir des signaux pilotes précodés émis par les autres émetteurs du groupe (Gg).

13. Emetteur (Ek) d'un réseau de communications (NW), ledit émetteur (Ek) formant un couple émetteur-récepteur avec un récepteur (Rk) du réseau, ce couple appartenant à un groupe comportant un nombre NG prédéterminé de couples émetteur-récepteur, ledit émetteur comprenant :

- des moyens d'exécution d'une technique itérative d'alignement d'interférences durant un nombre prédéterminé I1 d'itérations sur des signaux émis par ledit groupe, ladite technique d'alignement d'interférences comprenant l'application d'une matrice de précodage par chaque émetteur dudit groupe au signal qu'il émet et l'application d'une matrice de traitement par chaque récepteur dudit groupe au signal qu'il reçoit, les matrices de précodage et de traitement étant mises à jour à chaque itération de la technique itérative d'alignement d'interférences ; et

- des moyens d'envoi d'un signal pilote précodé à l'aide de la matrice de précodage résultant de l'exécution de la technique itérative d'alignement d'interférences et obtenue par l'émetteur à l'issue des I1 itérations;

ledit émetteur étant configuré pour rester silencieux lorsqu'un autre émetteur du groupe envoie un signal pilote précodé, les émetteurs des NG couples dudit groupe étant configurés pour émettre leurs signaux pilotes précodés successivement.

14. Système (1) d'un réseau de communications (NW) comprenant :

- une pluralité de couples émetteur-récepteur formés d'un émetteur (Ek) conforme à la revendication 13 et d'un récepteur (Rk) conforme à la revendication 12 ; et

- une unité centrale (UC) conforme à la revendication 11, apte à sélectionner parmi ladite pluralité de couples émetteur-récepteur, un groupe (GOPT) comprenant un nombre prédéterminé NG de couples émetteur-récepteur pour communiquer sur le réseau de communication.

**Patentansprüche**

1. Verfahren zur Gruppierung einer zuvor bestimmten Anzahl NG an Sender-/Empfängerpaaren, um auf einem Kommunikationsnetzwerk (NW) zu kommunizieren, wobei das Verfahren Folgendes aufweist:

- für jede Gruppe (Gg) einer bestimmten Gesamtheit ($\Omega$) von Gruppen, die NG Sender-/Empfängerpaare aufweisen:

• einen Ausführungsschritt (F40), durch die NG Paare der Gruppe (Gg), einer sich wiederholenden Abstimmungstechnik (IA) von Interferenzen während einer zuvor bestimmten Anzahl I1 an Wiederholungen an den Signalen, die durch die Gruppe ausgesendet werden, wobei die Technik die Anwendung einer Vorcodierungsmatrix durch jeden Sender der Gruppe auf das Signal, das er aussendet, und die Anwendung einer Verarbeitungsmatrix durch jeden Empfänger der Gruppe auf das Signal, das er empfängt, aufweist, wobei die Vorcodierungs- und Verarbeitungsmatrizen bei jeder Wiederholung der sich wiederholenden Abstimmungstechnik von Interferenzen aktualisiert werden;
• einen Sendeschritt (F50) durch jeden Sender (Ek) der NG Paare der Gruppe eines Pilotsignals, das mit Hilfe der Vorcodierungsmatrix vorcodiert wird, die aus der Ausführung der sich wiederholenden Abstimmungstechnik (IA) von Interferenzen resultiert, und die durch den Sender (Ek) nach den I1 Wiederholungen erhalten wird, wobei die anderen Sender der Gruppe stummgeschaltet bleiben, wenn ein Sender der Gruppe das vorcodierte Pilotsignal aussendet, und die Sender der NG Paare der Gruppe die Pilotsignale aufeinanderfolgend aussenden;
• einen Bewertungsschritt (F60), durch jeden Empfänger (Rk) der NG Paare der Gruppe, einer Metrik (dIA(k)), die für eine Entfernung zwischen einem Untervektorraum, der durch das vorcodierte Pilotsignal eingenommen wird, das durch den Sender ausgesendet wird, mit dem der Empfänger ein Sender-/Empfängerpaar bildet, und einem Untervektorraum repräsentativ ist, der durch die Interferenzen eingenommen wird, von denen dieses Pilotsignal beeinflusst wird, das ausgehend von vorcodierten Pilotsignalen bestimmt wird, die durch die Sender der Gruppe ausgesendet werden;

- einen Berechnungsschritt (F90), durch eine zentrale Einheit (UC) des Netzwerkes (NW), einer globalen Metrik, die jeder Gruppe der bestimmten Gesamtheit ($\Omega$) von Gruppen ausgehend von den Metriken (dIA(k)) zugeordnet wird, die durch die Empfänger der NG Paare dieser Gruppe bewertet werden; und
- einen Auswahlschritt (F100), durch die zentrale Einheit (UC), einer Gruppe (GOPT) aus der bestimmten Gesamtheit von Gruppen, um auf dem Netzwerk (NW) zu kommunizieren, wodurch die globale Metrik optimiert wird.

2. Verfahren zur Gruppierung nach Anspruch 1, bei dem, auf den Auswahlschritt (F100) folgend, die Paare der Gruppe (GOPT), die zum Kommunizieren auf dem Kommunikationsnetzwerk (NW) ausgewählt werden, die sich wiederholende Abstimmungstechnik (IA) von Interferenzen während einer Anzahl I2 an Wiederholungen, die höher als die Anzahl I1 ist, an den Signalen ausführen (F110), die durch die ausgewählte Gruppe ausgesendet werden.

3. Verfahren zur Auswahl, durch eine zentrale Einheit (UC) eines Kommunikationsnetzwerkes (NW), einer Gruppe (GOPT), die eine zuvor bestimmte Anzahl NG an Sender-/Empfängerpaaren aufweist, um auf dem Netzwerk zu kommunizieren, wobei das Verfahren Folgendes aufweist:

- für jede Gruppe (Gg) einer bestimmten Gesamtheit ($\Omega$) von Gruppen, die NG Sender-/Empfängerpaare aufweisen, einen Schritt zum Erhalten (F64) von Metriken (dIA(k)), die durch die Empfänger (Rk) der NG Paare der Gruppe (Gg) bewertet werden, auf die Ausführung (F40) einer Abstimmungstechnik (IA) von Interferenzen durch die Gruppe (Gg) während einer zuvor bestimmten Anzahl I1 an Wiederholungen an den Signalen folgend, die durch diese Gruppe ausgesendet werden, wobei die Abstimmungstechnik von Interferenzen die Anwendung einer Vorcodierungsmatrix durch jeden Sender der Gruppe auf das Signal, das er aussendet, und die Anwendung einer Verarbeitungsmatrix durch jeden Empfänger der Gruppe auf das Signal, das er empfängt, aufweist, wobei die Vorcodierungs- und Verarbeitungsmatrizen bei jeder Wiederholung der sich wiederholenden Abstimmungstechnik von Interferenzen aktualisiert werden, und auf den Empfang (F52) von Pilotsignalen folgend, die durch die Sender (Ek) der NG Paare der Gruppe aufeinanderfolgend ausgesendet werden, die anderen Sender der Gruppe stummgeschaltet bleiben, wenn ein Sender der Gruppe das Pilotsignal aussendet, wobei die Pilotsignale, die ausgesendet werden, mit Hilfe der Vorcodierungsmatrizen vorcodiert werden, die aus der Ausführung der sich wiederholenden Abstimmungstechnik von Interferenzen resultieren, und durch die Sender (Ek) der NG Paare der Gruppe nach I1 Wiederholungen erhalten werden, wobei jede Metrik, die durch einen Empfänger der Gruppe bewertet wird, für eine Entfernung zwischen einem Untervektorraum, der durch das vorcodierte Pilotsignal, das durch den Sender ausgesendet wird, mit welchem der Empfänger ein Sender-/Empfängerpaar bildet, eingenommen wird, und einem Untervektorraum repräsentativ ist, der durch die Interferenzen eingenommen wird, von denen dieses vorcodierte Pilotsignal beeinflusst wird, das ausgehend von vorcodierten Pilotsignalen bestimmt wird, die von den anderen Sendern der Gruppe ausgesendet werden;

- einen Berechnungsschritt (F90) einer globalen Metrik, die jeder Gruppe der bestimmten Gesamtheit ($\Omega$) von Gruppen zugeordnet wird, die ausgehend von den Metriken (dIA(k)) bestimmt wird, die durch die Empfänger der NG Paare dieser Gruppe (Gg) bewertet werden; und

- einen Auswahlschritt (F100) einer Gruppe (GOPT), aus der bestimmten Gesamtheit ($\Omega$) von Gruppen, um auf dem Netzwerk (NW) zu kommunizieren, wodurch die globale Metrik optimiert wird.

4. Verfahren zur Auswahl nach Anspruch 3, **dadurch gekennzeichnet, dass** die globale Metrik, die einer Gruppe (Gg) zugeordnet ist, gleich der Summe der Metriken (dIA(k)) ist, die durch die Empfänger der NG Paare dieser Gruppe bewertet werden.

5. Computerprogramm, das Anweisungen zur Ausführung der Schritte des Verfahrens zur Auswahl nach Anspruch 3 umfasst, wenn das Programm durch einen Computer ausgeführt wird.

6. Verfahren zur Bewertung einer Metrik (dIA(k)) durch einen Empfänger (Rk) eines Kommunikationsnetzwerkes (NW), wobei der Empfänger (Rk) ein Sender-/Empfängerpaar mit einem Sender (Ek) des Netzwerkes bildet, wobei dieses Paar einer Gruppe (Gg) angehört, die eine zuvor bestimmte Anzahl NG an Sender-/Empfängerpaaren umfasst, wobei das Verfahren zur Bewertung Folgendes aufweist:

- einen Ausführungsschritt (F40) einer sich wiederholenden Abstimmungstechnik (IA) von Interferenzen während einer zuvor bestimmten Anzahl I1 an Wiederholungen an den Signalen, die durch die Gruppe (Gg) ausgesendet werden, wobei die Abstimmungstechnik von Interferenzen die Anwendung einer Vorcodierungsmatrix durch jeden Sender der Gruppe auf das Signal, das er aussendet, und die Anwendung einer Verarbeitungsmatrix durch jeden Empfänger der Gruppe auf das Signal, das er empfängt, aufweist, wobei die Vorcodierungs- und Verarbeitungsmatrizen bei jeder Wiederholung der sich wiederholenden Abstimmungstechnik von Interferenzen aktualisiert werden;

- einen Empfangsschritt (F52) von Pilotsignalen, die durch die Sender der NG Paare der Gruppe aufeinanderfolgend ausgesendet werden, wobei die anderen Sender der Gruppe stummgeschaltet bleiben, wenn ein Sender der Gruppe das Pilotsignal aussendet, wobei die Pilotsignale, die ausgesendet werden, mit Hilfe der Vorcodierungsmatrizen vorcodiert werden, die aus der Ausführung der sich wiederholenden Abstimmungstechnik von Interferenzen resultieren, und durch die Sender (Ek) der NG Paare der Gruppe nach den I1 Wiederholungen erhalten werden; und

- einen Bewertungsschritt (F60) einer Metrik (dIA(k)), die für eine Entfernung zwischen einem Untervektorraum, der durch das vorcodierte Pilotsignal eingenommen wird, das durch den Sender ausgesendet wird, mit dem der Empfänger ein Sender-/Empfängerpaar bildet, und einem Untervektorraum repräsentativ ist, der durch die Interferenzen eingenommen wird, von denen dieses vorcodierte Pilotsignal beeinflusst wird, das ausgehend von vorcodierten Pilotsignalen bestimmt wird, die durch die anderen Sender der Gruppe (Gg) ausgesendet werden.

7. Verfahren zur Bewertung einer Metrik nach Anspruch 6, das außerdem einen Übertragungsschritt (F68) der Metrik (dIA(k)) an den Sender (Ek), mit welchem der Empfänger (Rk) das Paar bildet, oder an eine zentrale Einheit (UC) des Kommunikationsnetzwerkes aufweist.

8. Verfahren zur Bewertung einer Metrik nach Anspruch 6, wobei die bewertete Metrik für eine Entfernung der Potenzgeraden (Chordale) zwischen den Untervektorräumen repräsentativ ist.

9. Verfahren zur Bewertung einer Metrik nach Anspruch 6, wobei der Empfänger (Rk) mit MR Empfangsantennen ausgestattet ist, und wobei es sich bei dem Unterraum, der durch die Interferenzen eingenommen wird, der zum Bewerten der Metrik berücksichtigt wird, um den Untervektorraum handelt, der durch die stärksten MR-1 Interferenzen eingenommen wird.

10. Computerprogramm, das Anweisungen zur Ausführung der Schritte des Verfahrens zur Auswahl nach Anspruch 6 umfasst, wenn das Programm durch einen Computer ausgeführt wird.

11. Zentrale Einheit (UC) eines Kommunikationsnetzwerkes, die in der Lage ist, eine Gruppe (GOPT) auszuwählen, um auf dem Netzwerk zu kommunizieren, wobei die Gruppe eine zuvor bestimmte Anzahl NG an Sender-/Empfängerpaaren aufweist, wobei die zentrale Einheit (UC) Folgendes aufweist:

- Mittel zum Erhalten, für jede Gruppe (Gg) einer bestimmten Gesamtheit (Ω) von Gruppen, die NG Sender-/Empfängerpaare aufweist, der Metriken (dIA(k)), die durch die Empfänger der NG Paare der Gruppe bewertet werden, auf die Ausführung (F40) einer Abstimmungstechnik (IA) von Interferenzen durch die Gruppe während einer zuvor bestimmten Anzahl I1 an Wiederholungen an den Signalen folgend, die durch diese Gruppe ausgesendet werden, wobei die Abstimmungstechnik von Interferenzen die Anwendung einer Vorcodierungsmatrix durch jeden Sender der Gruppe auf das Signal, das er aussendet, und die Anwendung einer Verarbeitungsmatrix durch jeden Empfänger der Gruppe auf das Signal, das er empfängt, aufweist, wobei die Vorcodierungs- und Verarbeitungsmatrizen bei jeder Wiederholung der sich wiederholenden Abstimmungstechnik von Interferenzen aktualisiert werden, und auf den Empfang (F52) von Pilotsignalen folgend, die durch die Sender der NG Paare der Gruppe aufeinanderfolgend ausgesendet werden, die anderen Sender der Gruppe stummgeschaltet bleiben, wenn ein Sender der Gruppe das Pilotsignal aussendet, wobei die Pilotsignale, die ausgesendet werden, mit Hilfe der Vorcodierungsmatrizen vorcodiert werden, die aus der Ausführung der sich wiederholenden Abstimmungstechnik von Interferenzen resultieren, und durch die Sender (Ek) der NG Paare der Gruppe nach I1 Wiederholungen erhalten werden, wobei jede Metrik, die durch einen Empfänger der Gruppe bewertet wird, für eine Entfernung zwischen einem Untervektorraum, der durch das vorcodierte Pilotsignal eingenommen wird, das durch den Sender ausgesendet wird, mit welchem der Empfänger ein Sender-/Empfängerpaar bildet, und einem Untervektorraum repräsentativ ist, der durch die Interferenzen eingenommen wird, von denen dieses vorcodierte Pilotsignal beeinflusst wird, das ausgehend von den vorcodierten Pilotsignalen bestimmt wird, die von den anderen Sendern der Gruppe ausgesendet werden;
- Mittel zur Berechnung einer globalen Metrik, die jeder Gruppe der bestimmten Gesamtheit von Gruppen zugeordnet wird, die ausgehend von den Metriken bestimmt wird, die durch die Empfänger der NG Paare dieser Gruppe bewertet werden; und
- Mittel zur Auswahl einer Gruppe (GOPT), um auf dem Netzwerk zu kommunizieren, aus der bestimmten Gesamtheit von Gruppen, wodurch die globale Metrik optimiert wird.

12. Empfänger (Rk) eines Kommunikationsnetzwerkes (NW), wobei der Empfänger (Rk) ein Sender-/Empfängerpaar mit einem Sender (Ek) des Netzwerkes bildet, wobei dieses Paar einer Gruppe (Gg) angehört, die NG Sender-/Empfängerpaare aufweist, wobei der Empfänger Folgendes aufweist:

- Mittel zur Ausführung einer sich wiederholenden Abstimmungstechnik (IA) von Interferenzen während einer zuvor bestimmten Anzahl I1 an Wiederholungen an den Signalen, die durch die Gruppe ausgesendet werden, wobei die Abstimmungstechnik von Interferenzen die Anwendung einer Vorcodierungsmatrix durch jeden Sender der Gruppe auf das Signal, das er aussendet, und die Anwendung einer Verarbeitungsmatrix durch jeden Empfänger der Gruppe auf das Signal, das er empfängt, aufweist, wobei die Vorcodierungs- und Verarbeitungsmatrizen bei jeder Wiederholung der sich wiederholenden Abstimmungstechnik von Interferenzen aktualisiert werden;
- Mittel zum Empfangen von Pilotsignalen, die durch die Sender der NG Paare der Gruppe aufeinanderfolgend ausgesendet werden, wobei die anderen Sender der Gruppe stummgeschaltet bleiben, wenn ein Sender der Gruppe das Pilotsignal aussendet, wobei die Pilotsignale, die ausgesendet werden, mit Hilfe der Vorcodierungsmatrizen vorcodiert werden, die aus der Ausführung der sich wiederholenden Abstimmungstechnik von Interferenzen resultieren, und durch die Sender (Ek) der NG Paare der Gruppe nach I1 Wiederholungen erhalten werden; und
- Mittel zur Bewertung einer Metrik (dIA(k)), die für eine Entfernung zwischen einem Untervektorraum, der durch das vorcodierte Pilotsignal eingenommen wird, das durch den Sender ausgesendet wird, mit welchem der Empfänger ein Sender-/Empfängerpaar bildet, und einem Untervektorraum repräsentativ ist, der durch die Interferenzen eingenommen wird, von denen dieses vorcodierte Pilotsignal beeinflusst wird, das ausgehend von vorcodierten Pilotsignalen bestimmt wird, die durch die anderen Sender der Gruppe (Gg) ausgesendet werden.

13. Sender (Ek) eines Kommunikationsnetzwerkes (NW), wobei der Sender (Ek) ein Sender-/Empfängerpaar mit einem Empfänger (Rk) des Netzwerkes bildet, wobei dieses Paar einer Gruppe angehört, die eine zuvor bestimmte Anzahl NG an Sender-/Empfängerpaaren umfasst, wobei der Sender Folgendes aufweist:

- Mittel zur Ausführung einer sich wiederholenden Abstimmungstechnik von Interferenzen während einer zuvor bestimmten Anzahl I1 an Wiederholungen an den Signalen, die durch die Gruppe ausgesendet werden, wobei die Abstimmungstechnik von Interferenzen die Anwendung einer Vorcodierungsmatrix durch jeden Sender der Gruppe auf das Signal, das er aussendet, und die Anwendung einer Verarbeitungsmatrix durch jeden Empfänger der Gruppe auf das Signal, das er empfängt, aufweist, wobei die Vorcodierungs- und Verarbeitungsmatrizen bei jeder Wiederholung der sich wiederholenden Abstimmungstechnik von Interferenzen aktualisiert werden; und

- Mittel zum Senden eines Pilotsignals, das mit Hilfe der Vorcodierungsmatrix vorcodiert wird, die aus der Ausführung der sich wiederholenden Abstimmungstechnik von Interferenzen resultiert, und durch den Sender nach den I1 Wiederholungen erhalten wird, wobei der Sender dafür ausgestaltet ist stummgeschaltet zu bleiben, wenn ein anderer Sender der Gruppe ein vorcodiertes Pilotsignal aussendet, die Sender der NG Paare der Gruppe dafür ausgestaltet sind ihre Pilotsignale aufeinanderfolgend auszusenden.

14. System (1) eines Kommunikationsnetzwerkes (NW), das Folgendes aufweist:

- eine Vielzahl von Sender-/Empfängerpaaren, die aus einem Sender (Ek) gemäß dem Anspruch 13 und einem Empfänger (Rk) gemäß dem Anspruch 12 gebildet werden; und
- eine zentrale Einheit (UC) gemäß Anspruch 11, die dazu in der Lage ist, aus der Vielzahl von Sender-/Empfängerpaaren eine Gruppe (GOPT) auszuwählen, die eine zuvor bestimmte Anzahl NG an Sender-/Empfängerpaaren umfasst, um auf dem Kommunikationsnetzwerk zu kommunizieren.

**Claims**

1. Method for grouping together a predetermined number NG of transmitter-receiver pairs for communicating over a communication network (NW), said method comprising:

- for each group (Gg) of a determined set ($\Omega$) of groups comprising NG transmitter-receiver pairs:

    o a step of execution (F40), by the NG pairs of said group (Gg), of an iterative interference alignment technique (IA) for a predetermined number I1 of iterations on signals transmitted by said group, said technique comprising the application of a precoding matrix by each transmitter of said group to said signal that it transmits and the application of a processing matrix by each receiver of said group to the signal that it receives, the precoding and processing matrices being updated on each iteration of the iterative interference alignment technique;

    o a step of sending (F50), by each transmitter (Ek) of the NG pairs of said group of a pilot signal precoded using the precoding matrix resulting from the execution of said iterative interference alignment technique (IA) and obtained by the transmitter (Ek) at the end of said I1 iterations, the other transmitters of the group remaining silent when a transmitter of the group sends the precoded pilot signal, and the transmitters of the NG pairs of said group transmitting the pilot signals in succession;

    o a step of evaluation (F60), by each receiver (Rk) of the NG pairs of said group, of a metric (dIA(k)) representative of a distance between a vector subspace generated by the precoded pilot signal transmitted by the transmitter with which the receiver forms a transmitter-receiver pair, and a vector subspace generated by interferences affecting this pilot signal determined from the precoded pilot signals transmitted by the other transmitters of the group;

    - a step of computation (F90), by a central processing unit (UC) of the network (NW), of a global metric associated with each group of the determined set ($\Omega$) of groups from the metrics (dIA(k)) evaluated by the receivers of the NG pairs of this group; and
    - a step of selection (F100), by the central processing unit (UC), of a group (GOPT) out of the determined set of groups for communicating over the network (NW) optimizing the global metric.

2. Grouping method according to Claim 1, in which, following the selection step (F100) the pairs of the group selected (GOPT) to communicate over the communication network (NW) execute (F110) said iterative interference alignment technique (IA) for a number 12 of iterations greater than the number I1 on signals transmitted by said selected group.

3. Method for selection, by a central processing unit (UC) of a communication network (NW), of a group (GOPT) comprising a predetermined number NG of transmitter-receiver pairs for communicating over said network, said method comprising:

- for each group (Gg) of a determined set (Ω) of groups comprising NG transmitter-receiver pairs, a step of obtention (F64) of metrics (dIA(k)) evaluated by the receivers (Rk) of the NG pairs of said group (Gg), following the execution (F40) of an interference alignment technique (IA) by said group (Gg) for a predetermined number I1 of iterations on signals transmitted by this group, said interference alignment technique comprising the application of a precoding matrix by each transmitter of said group to the signal that it transmits and the application of a processing matrix by each receiver of said group to the signal that it receives, the precoding and processing matrices being updated on each iteration of the iterative interference alignment technique, and following the reception (F52) of pilot signals transmitted in succession by the transmitters (Ek) of the NG pairs of said group, the other transmitters of the group remaining silent when a transmitter of the group sends the pilot signal, said transmitted pilot signals being precoded using the precoding matrices resulting from the execution of the iterative interference alignment technique and obtained by the transmitters (Ek) of the NG pairs of said group at the end of the I1 iterations, each metric evaluated by a receiver of said group being representative of a distance between a vector subspace generated by the precoded pilot signal transmitted by the transmitter with which the receiver forms a transmitter-receiver pair, and a vector subspace generated by interferences affecting this precoded pilot signal determined from the precoded pilot signals transmitted by the other transmitters of the group;
- a step of computation (F90) of a global metric associated with each group of said determined set (Ω) of groups from the metrics (dIA(k)) evaluated by the receivers of the NG pairs of this group (Gg); and
- a step of selection (F100) of a group (GOPT), out of the determined set (Ω) of groups, to communicate over the network (NW), optimizing the global metric.

4. Selection method according to Claim 3, **characterized in that** the global metric associated with a group (Gg) is equal to the sum of the metrics (dIA(k)) evaluated by the receivers of the NG pairs of this group.

5. Computer program comprising instructions for the execution of the steps of the selection method according to Claim 3 when said program is run by a computer.

6. Method for evaluating a metric (dIA(k)) by a receiver (Rk) of a communication network (NW), said receiver (Rk) forming a transmitter-receiver pair with a transmitter (Ek) of the network, this pair belonging to a group (Gg) comprising a predetermined number NG of transmitter-receiver pairs, said evaluation method comprising:

- a step of execution (F40) of an iterative interference alignment technique (IA) for a predetermined number I1 of iterations on signals transmitted by said group (Gg), said interference alignment technique comprising the application of a precoding matrix by each transmitter of said group to the signal that it transmits and the application of a processing matrix by each receiver of said group to the signal that it receives, the precoding and processing matrices being updated on each iteration of the iterative interference alignment technique;
- a step of reception (F52) of pilot signals transmitted in succession by the transmitters of the NG pairs of said group, the other transmitters of the group remaining silent when a transmitter of the group sends the pilot signal, said transmitted pilot signals being precoded using the precoding matrices resulting from the execution of the iterative interference alignment technique and obtained by the transmitters (Ek) of the NG pairs of said group at the end of the I1 iterations; and
- a step of evaluation (F60) of a metric (dIA(k)) representative of a distance between a vector subspace generated by the precoded pilot signal transmitted by the transmitter with which the receiver forms a transmitter-receiver pair, and a vector subspace generated by interferences affecting this precoded pilot signal determined from the precoded pilot signals transmitted by the other transmitters of the group (Gg).

7. Method for evaluating a metric according to Claim 6, further comprising a step of transmission (F68) of said metric (dIA(k)) to the transmitter (Ek) with which said receiver (Rk) forms said pair or to a central processing unit (UC) of the communication network.

8. Method for evaluating a metric according to Claim 6, in which the metric evaluated is representative of a chordal distance between said vector subspaces.

9. Method for evaluating a metric according to Claim 6, in which the receiver (Rk) is equipped with MR reception antennas, and in which the subspace generated by interferences considered to evaluate the metric is the vector subspace generated by the MR-1 strongest interferences.

10. Computer program comprising instructions for the execution of the steps of the selection method according to Claim 6 when said program is run by a computer.

11. Central processing unit (UC) of a communication network capable of selecting a group (GOPT) for communicating over said network, said group comprising a predetermined number NG of transmitter-receiver pairs, said central processing unit (UC) comprising:

- means for obtaining, for each group (Gg) of a determined set ($\Omega$) of groups comprising NG transmitter-receiver pairs, metrics (dIA(k)) evaluated by the receivers of the NG pairs of said group, following the execution (F40) by said group of an interference alignment technique for a predetermined number I1 of iterations on signals transmitted by this group, said interference alignment technique comprising the application of a precoding matrix by each transmitter of said group to the signal that it transmits and the application of a processing matrix by each receiver of said group to the signal that it receives, the precoding and processing matrices being updated on each iteration of the iterative interference alignment technique, and following the reception (F52) of pilot signals transmitted in succession by the transmitters of the NG pairs of said group, the other transmitters of the group remaining silent when a transmitter of the group sends the pilot signal, said transmitted pilot signals being precoded using the precoding matrices resulting from the execution of the iterative interference alignment technique and obtained by the transmitters (Ek) of the NG pairs of said group at the end of the I1 iterations, each metric evaluated by a receiver of said group being representative of a distance between a vector subspace generated by the precoded pilot signal transmitted by the transmitter with which the receiver forms a transmitter-receiver pair, and a vector subspace generated by interferences affecting this precoded pilot signal determined from the precoded pilot signals transmitted by the other transmitters of the group;
- means for computing a global metric associated with each group of the determined set of groups from the metrics evaluated by the receivers of the NG pairs of this group; and
- means for selecting a group (GOPT) for communicating over the network, out of the determined set of groups, optimizing the global metric.

12. Receiver (Rk) of a communication network (NW), said receiver (Rk) forming a transmitter-receiver pair with a transmitter (Ek) of the network, this pair belonging to a group (Gg) comprising NG transmitter-receiver pairs, said receiver comprising:

- means for executing an iterative interference alignment technique (IA) for a predetermined number I1 of iterations on signals transmitted by said group, said interference alignment technique comprising the application of a precoding matrix by each transmitter of said group to the signal that it transmits and the application of a processing matrix by each receiver of said group to the signal that it receives, the precoding and processing matrices being updated on each iteration of the iterative interference alignment technique;
- means for receiving pilot signals transmitted in succession by the transmitters of the NG pairs of said group, the other transmitters of the group remaining silent when a transmitter of the group sends the pilot signal, said transmitted pilot signals being precoded using the precoding matrices resulting from the execution of the iterative interference alignment technique and obtained by the transmitters (Ek) of the NG pairs of said group at the end of the I1 iterations; and
- means for evaluating a metric (dIA(k)) representative of a distance between a vector subspace generated by the precoded pilot signal transmitted by the transmitter with which the receiver forms a transmitter-receiver pair, and a vector subspace generated by interferences affecting this precoded pilot signal determined from the precoded pilot signals transmitted by the other transmitters of the group (Gg).

13. Transmitter (Ek) of a communication network (NW), said transmitter (Ek) forming a transmitter-receiver pair with a receiver (Rk) of the network, this pair belonging to a group comprising a predetermined number NG of transmitter-receiver pairs, said transmitter comprising:

- means for executing an iterative interference alignment technique for a predetermined number I1 of iterations on signals transmitted by said group, said interference alignment technique comprising the application of a precoding matrix by each transmitter of said group to the signal that it transmits and the application of a processing matrix by each receiver of said group to the signal that it receives, the precoding and processing matrices being updated on each iteration of the iterative interference alignment technique; and
- means for sending a pilot signal precoded using the precoding matrix resulting from the execution of the iterative interference alignment technique and obtained by the transmitter at the end of the I1 iterations, said transmitter being configured to remain silent when another transmitter of the group sends a precoded pilot signal, the transmitters of the NG pairs of said group being configured to transmit their precoded pilot signals in succession.

**14.** System (1) of a communication network (NW) comprising:

- a plurality of transmitter-receiver pairs formed by a transmitter (Ek) according to Claim 13 and a receiver (Rk) according to Claim 12; and
- a central processing unit (UC) according to Claim 11, capable of selecting, from said plurality of transmitter-receiver pairs, a group (GOPT) comprising a predetermined number NG of transmitter-receiver pairs to communicate over the communication network.

EP 2 795 984 B1

## FIG.1

```
            ┌──────────────────┐
            │      R,NG        │──E10
            └──────────────────┘
                     │
      ┌──  ┌──────────────────┐
      │    │   SING VAL > T   │──E20
      │    └──────────────────┘
      │             │
      │    ┌──────────────────┐
  I ──┤    │ SELECT NG COUPLES │──E30
      │    └──────────────────┘
      │             │
      │    ┌──────────────────┐
      │    │   TOTAL RATE     │──E40
      │    └──────────────────┘
      │             │           E50
      └──      ◇ ≥ R ? ◇ ────── oui
                     │ non
      ┌──  ┌──────────────────┐
      │    │ SELECT (NG+c) COUPLES │──E60
      │    └──────────────────┘
      │             │
      │    ┌──────────────────┐
 II ──┤    │   TOTAL RATE     │──E70
      │    │    (INCL IA)     │
      │    └──────────────────┘
      │             │
      │    ┌──────────────────┐
      └──  │ SELECT NG COUPLES │──E80
           └──────────────────┘
                     │
           ┌──────────────────┐
           │     EXEC IA      │──E90
           └──────────────────┘
```

## FIG.1

## FIG.2

**FIG.2**

FIG.3A

UC

FIG.3B

Rk

FIG.3C

Ek

$\Omega$,NG — F10

INIT
(k=1) — F20

START TEST Gg — F30

EXEC IA (Gg)
(Ek,Rk) $\in$ Gg,l1 iter — F40

SEND PILOTS
(Ek $\in$ Gg) — F50

CALC METRICS
(Rk $\in$ Gg) — F60

F80
g $\leftarrow$ g+1

non

g $\geqslant$ N$\Omega$ ? — F70

oui

CALC GLOB METRICS
(UC) — F90

SELECT GROUP OPT
(UC) — F100

EXEC IA (GOPT)
l2 iter — F110

FIG.4

```
┌─────────────────┐
│    EXEC IA      │⌐─ F40
│    I1 iter      │
└─────────────────┘
        │
        ▼
┌─────────────────┐
│    RX PILOTS    │⌐─ F52
└─────────────────┘
        │
        ▼
┌─────────────────┐
│    EVAL I,Su    │⌐─ F54
└─────────────────┘
        │
        ▼
┌─────────────────┐
│   CALC  METRIC  │⌐─ F60
└─────────────────┘
        │
        ▼
┌─────────────────┐
│    TX  METRIC   │⌐─ F68
└─────────────────┘
```

# FIG.5

```
┌─────────────────┐
│     Ω,NG        │⌐─ F10
└─────────────────┘
        │
        ▼
┌─────────────────┐
│    SCHEDULE     │⌐─ F22
└─────────────────┘
        │
        ▼
┌─────────────────┐
│   RX METRICS    │⌐─ F64
└─────────────────┘
        │
        ▼
┌─────────────────┐
│ CALC GLOB METRICS │⌐─ F90
└─────────────────┘
        │
        ▼
┌─────────────────┐
│ SELECT GROUP OPT │⌐─ F100
└─────────────────┘
```

# FIG.6

F60

```
                    ┌──────────────┐
                    │ Bk=[ ]  k'=1 │⌐─ F61
                    └──────────────┘
                           │
                           ▼
F63                  ◇─────────────◇
┌──────────┐   non  ╱   k'≠k ?     ╲
│ k'←─ k'+1 │◀──────│               │
└──────────┘        ╲               ╱
                     ◇─────────────◇  F62
                           │ oui
                           ▼
                     ◇─────────────◇         ┌──────────────────────┐
                    ╱   k'>NG ?     ╲  non   │ Bk =[Bk,Hk',kVk']    │⌐─ F65
                    │               │───────▶│ k'←─ k'+1            │
                     ╲             ╱          └──────────────────────┘
                      ◇───────────◇  F64
                           │ oui
                           ▼
                    ┌──────────────┐
                    │      Ak      │⌐─ F66
                    └──────────────┘
                           │
                           ▼
                    ┌──────────────┐         FIG.7
                    │   METRIC     │⌐─ F67
                    └──────────────┘
```

```
   │← Tg,g=1 ───────────→│← Tg,g=2 ──────────→│    │←── Tg,g=NΩ ──────→│
┌──────┬──┬───┬──┬─────┬──────┬──┬───┬──┬─────┬───┬──────┬──┬───┬──┬─────┬──────┐
│Ttest │Tp│...│Tp│Tfeed│Ttest │Tp│...│Tp│Tfeed│...│Ttest │Tp│...│Tp│Tfeed│T(IA) │
└──────┴──┴───┴──┴─────┴──────┴──┴───┴──┴─────┴───┴──────┴──┴───┴──┴─────┴──────┘
   │←──────────────────────── Tdecision ────────────────────────────→│
```

# FIG.8

FIG.9

**EP 2 795 984 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010227613 A
- US 2010227566 A
- US 8036098 B

**Littérature non-brevet citée dans la description**

- **ZUCCON et al.** Semantic Spaces: Measuring the Distance between different Subspaces. *Proceedings of the 3rd International Symposium on Quantum interaction,* 2009